(19) **Europäisches Patentamt**
**European Patent Office**
**Office européen des brevets**

(11) **EP 4 408 004 A1**

(12) **EUROPEAN PATENT APPLICATION**
published in accordance with Art. 153(4) EPC

(43) Date of publication:
**31.07.2024 Bulletin 2024/31**

(51) International Patent Classification (IPC):
***H04N 23/00*** (2023.01)          ***G03B 17/55*** (2021.01)

(21) Application number: **22894298.3**

(52) Cooperative Patent Classification (CPC):
**H04N 23/51; G03B 17/55; G08B 13/19619;**
**H04N 23/52; H04N 23/54; H04N 23/55;**
**H04N 23/56;** G03B 2217/002

(22) Date of filing: **15.07.2022**

(86) International application number:
**PCT/CN2022/105899**

(87) International publication number:
**WO 2023/087755 (25.05.2023 Gazette 2023/21)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.11.2021   CN 202111358312**
               **16.11.2021   CN 202111356893**
               **16.11.2021   CN 202122811319 U**

(71) Applicant: **Hangzhou Hikvision Digital**
**Technology Co., Ltd.**
**Hangzhou, Zhejiang 310051 (CN)**

(72) Inventors:
• **LIN, Yuhao**
  **Hangzhou, Zhejiang 310051 (CN)**

• **YAN, Caisheng**
  **Hangzhou, Zhejiang 310051 (CN)**
• **YE, Zhan**
  **Hangzhou, Zhejiang 310051 (CN)**
• **LI, Junnan**
  **Hangzhou, Zhejiang 310051 (CN)**
• **WANG, Yangjian**
  **Hangzhou, Zhejiang 310051 (CN)**
• **ZHANG, Hao**
  **Hangzhou, Zhejiang 310051 (CN)**
• **ZHOU, Bin**
  **Hangzhou, Zhejiang 310051 (CN)**

(74) Representative: **Epping - Hermann - Fischer**
**Patentanwaltsgesellschaft mbH**
**Schloßschmidstraße 5**
**80639 München (DE)**

(54) **CAMERA, AND SHELL ASSEMBLY OF CAMERA**

(57)     The present disclosure provides a camera and a camera housing assembly. The camera comprises: a housing assembly formed as a rotary body structure with a central axis, wherein the housing assembly includes an outer shell made of plastic and an inner shell made of thermally conductive plastic, the outer shell covers the outer side of the inner shell, the outer surface of the inner shell fits and is engaged with the inner surface of the outer shell, and the inner shell and the outer shell are kept fixed relative to each other through a connection structure; and a lens assembly, an electronic device and a heat dissipation sheet metal that are received inside the housing assembly, wherein the optical axis of the lens assembly is oriented in a same direction as the central axis, and the heat dissipation sheet metal is attached to the electronic device and the inner shell for transferring heat generated by the electronic device to the inner shell.

Fig. 2

**Description**

The present disclosure claims the priority to a Chinese patent application No. 202111358312.6 filed with the China National Intellectual Property Administration on November 16, 2021 and entitled "CAMERA", a Chinese patent application No. 202122811319.0 filed with the China National Intellectual Property Administration on November 16, 2021 and entitled "CAMERA AND CAMERA HOUSING AS SENMLY", and a Chinese patent application No. 202111356893.X filed with the China National Intellectual Property Administration on November 16, 2021 and entitled "CAMERA", the entire content of which is incorporated herein by reference.

**TECHNICAL FIELD**

The present disclosure relates to a technical field of monitoring, and specifically to a camera and a camera housing assembly.

**BACKGROUND**

What is presented in this section is merely background information related to the present disclosure and is not necessarily prior art.
The camera is widely used in the field of monitoring, and electronic devices are provided inside the camera. Excessive temperature rise of the electronic devices will affect the performance of the camera. In order to meet the heat dissipation requirements, some cameras adopt metal housings, but the metal housings are expensive, have poor corrosion resistance, and are not environmentally friendly in production technology.

**SUMMARY**

The present disclosure provides a camera and a camera housing assembly, which can achieve the goals of low cost, high performance and environmentally friendly manufacturing process.
A first aspect of the present disclosure provides a camera, including:

- a housing assembly, formed as a rotary body structure with a central axis, wherein the housing assembly includes an outer shell made of plastic and an inner shell made of thermally conductive plastic, the outer shell covers an outer side of the inner shell, an outer surface of the inner shell fits and is engaged with an inner surface of the outer shell, and the inner shell and the outer shell are kept fixed relative to each other through a connection structure; and

- a lens assembly, an electronic device and a heat dissipation sheet metal that are received inside the housing assembly, wherein an optical axis of the lens assembly is oriented in a same direction as the central axis, and the heat dissipation sheet metal is engaged with the electronic device and the inner shell for transferring heat generated by the electronic device to the inner shell.

A second aspect of the present disclosure also provides a camera housing assembly, including:

- an inner shell made of thermally conductive plastic material;

- a first outer shell made of plastic;

  wherein the outer shell covers the inner shell to form a first receiving cavity with an opening, and the inner shell is defined such that at an end surface with the opening, an end surface of the first outer shell is higher than an end surface of the inner shell;

  wherein an inner surface of the first outer shell is provided with a first connection structure, an outer surface of the inner shell is provided with a second connection structure, and the first connection structure receives the second connection structure, so that the outer surface of the inner shell and the inner surface of the first outer shell form a thermal conduction channel.

A third aspect of the present disclosure provides a camera, including: a housing assembly, a control board assembly, and a lens assembly. The housing assembly includes an outer shell made of engineering plastic and an inner shell made of thermally conductive plastic. The outer shell includes a first outer shell and a second outer shell. The first outer shell and the second outer shell are assembled to form a receiving cavity. The first outer shell is provided with a viewing window. Both the control board assembly and the lens assembly are assembled inside the receiving cavity and located inside the first outer shell. The lens assembly is assembled to the control board assembly and extends from the control board assembly toward the viewing window;

wherein the first outer shell and the inner shell are integrally formed by two-color injection molding, the first outer shell covers an outer surface of the inner shell, and the control board assembly is in heat conduction with the inner shell.

It is to be understood that the foregoing general description and the following detailed description are exemplary and explanatory only, and are not intended to limit the present disclosure.

**BRIEF DESCRIPTION OF DRAWINGS**

In order to illustrate the embodiments of the present disclosure and the technical solutions of the prior art more clearly, the accompanying drawings used in the embodiments and the prior art are described briefly below. Obviously, the accompanying drawings in the following description are only some embodiments of the present disclosure. Other drawings can be obtained from these drawings by those skilled in the art without making any creative efforts.

Fig. 1 is a schematic diagram of a camera according to an exemplary embodiment of the present disclosure;

Fig. 2 is a sectional view of the camera shown in Fig. 1;

Fig. 3 is a schematic diagram of an inner shell of the housing assembly;

Fig. 4 is a schematic diagram of an outer shell of the housing assembly;

Fig. 5 is a sectional view of the inner shell and the outer shell in an engaged state;

Fig. 6 is an orthographic view of the inner shell along a central axis from the front end to the rear end of the lens assembly;

Fig. 7 is an orthographic view of the outer shell along the central axis from the rear end to the front end of the lens assembly;

Fig. 8 is a schematic diagram of an outer surface of the inner shell;

Fig. 9 is a sectional view of the outer shell;

Fig. 10 is a schematic diagram showing the engagement of a heat dissipation sheet metal with a thermally conductive pad;

Fig. 11 is a schematic diagram of a heat dissipation surface on one side of the inner shell;

Fig. 12 is a fitting curve of a total thermal resistance Ra and a unilateral engaging area Ap of the inner shell and the thermally conductive pad;

Fig. 13 is a sectional view of the inner shell and the outer shell in an engaged state;

Fig. 14 is a top view of the inner shell and the outer shell in the engaged state;

Fig. 15 is another sectional view of the inner shell and the outer shell in the engaged state;

Fig. 16 shows a schematic structural diagram of an embodiment of a camera of the present disclosure;

Fig. 17 shows a schematic top view of structure of the camera shown in Fig. 16;

Fig. 18 shows an exploded view of the camera shown in Fig. 16;

Fig. 19 shows a schematic sectional view of the camera shown in Fig. 16;

Fig. 20 shows a schematic structural view of an embodiment of a two-color injection molded shell of the camera shown in Fig. 16;

Fig. 21 shows a schematic view of partial structure of the two-color injection molded shell of the camera shown in Fig. 20;

Fig. 22 shows a schematic structural view of an embodiment of a first outer shell of the camera shown in Fig. 16;

Fig. 23 shows a schematic sectional view of the first outer shell of the camera shown in Fig. 22;

Fig. 24 shows a schematic structural diagram showing the assembling of a control board assembly, a lens assembly, a heat dissipation assembly and a power board of the camera shown in Fig. 16;

Fig. 25 shows a partially enlarged view at A1 of the camera shown in Fig. 24;

Fig. 26 shows a partial schematic structural diagram of the camera shown in Fig. 16;

Fig. 27 shows a partial schematic structural diagram of the camera shown in Fig. 16;

Fig. 28 shows an enlarged view of the layout at A2 of the camera shown in Fig. 27;

Fig. 29 shows a schematic top view of the structure of the control board assembly of the camera shown in Fig. 16;

Fig. 30 shows a partial schematic structural diagram of the camera shown in Fig. 16;

Fig. 31 shows a schematic structural diagram showing the assembling of a heat dissipation assembly, a first thermally conductive member, and a second thermally conductive member of the camera shown in Fig. 16;

Fig. 32 shows an exploded view showing the assembling of the heat dissipation assembly, the first thermally conductive member and the second thermally conductive member of the camera shown in Fig. 31;

Fig. 33 shows a schematic structural diagram showing the assembling of the heat dissipation assembly, the first thermally conductive member and the second thermally conductive member of the camera shown in Fig. 31 from another perspective;

Fig. 34 shows a schematic structural diagram showing the assembling of the heat dissipation assembly, the first thermally conductive member and the second thermally conductive member of the camera shown in Fig. 31 from yet another perspective;

Fig. 35 shows a partial schematic structural diagram of the camera shown in Fig. 16;

Fig. 36 shows a partial schematic structural diagram of the camera shown in Fig. 16;

Fig. 37 shows a schematic structural diagram at A3 of the camera shown in Fig. 36;

Fig. 38 shows a partial schematic structural diagram of the camera shown in Fig. 36;

Fig. 39 shows a schematic structural diagram of a lamp board of the camera shown in Fig. 35.

## DETAILED DESCRIPTION

In order to make the objectives, technical solutions, and advantages of the present disclosure more clear and understandable, the present disclosure will be further described in detail below with reference to the accompanying drawings and embodiments. Obviously, the described embodiments are only some, but not all, of the embodiments of the present disclosure. All other embodiments obtained based on the embodiments in the present disclosure by those of ordinary skill in the art without making any creative efforts fall into the protection scope of the present disclosure.

Exemplary embodiments will be described in detail herein, examples of which are illustrated in the accompanying drawings. When the following description refers to the drawings, the same number in different drawings refers to the same or similar element unless otherwise indicated. The implementations described in the following exemplary embodiments do not represent all implementations consistent with the present disclosure, and instead are merely examples of apparatus and methods consistent with some aspects of the present disclosure.

The terms used in the present disclosure are for the purpose of describing particular embodiments only and are not intended limit the present disclosure. Unless otherwise defined, technical terms or scientific terms used in the present disclosure shall have general meanings understood by those of ordinary skills in the art to which the present disclosure belongs. "First", "second" and similar words used in the present disclosure do not indicate any order, quantity or importance, but are used to distinguish different components only. Similarly, "a" or "an" and similar words do not indicate a number limitation, but indicate the existence of at least one. It will be explained separately when it means only "one". "Multiple" or "several" means two or more than two. Unless otherwise indicated, words such as "front", "rear", "lower" and/or "upper", "top", "bottom" and the like are used for ease of description only and are not intended to limit a position or a spatial orientation. "Including" or "include" and similar words mean that the elements or articles appearing before "including" or "include" comprise the elements or articles listed after "including" or "include" and equivalents thereof, and do not exclude other elements or articles. Words such as "connecting" or "connect" are not limited to physical or mechanical connections, but may include electrical connections, direct or indirect.

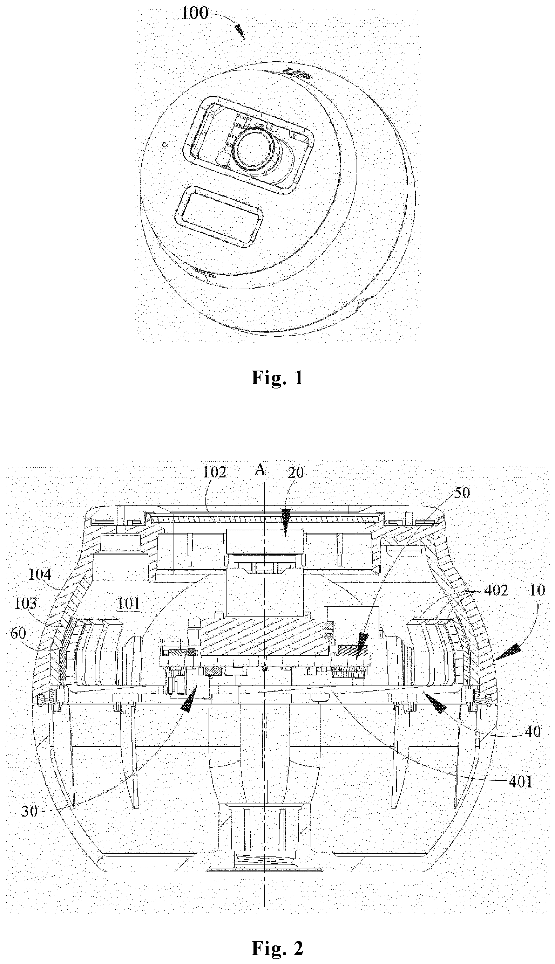

Please refer to Figs. 1 and 2. Fig. 1 is a schematic diagram of a camera 100 and a housing assembly 10 according to an embodiment of the present disclosure. Fig. 2 is a sectional view of the camera 100 shown in Fig 1.

The present disclosure provides a camera 100 and a housing assembly 10. The camera 100 includes, but is not limited to, a spherical camera, a hemispheric camera, and a gun camera. The hemispherical camera will be taken as an example in the present disclosure for detailed description.

The camera 100 includes a housing assembly 10, a lens assembly 20, an electronic device 30 and a heat dissipation sheet metal 40. The housing assembly 10 includes a receiving cavity 101, and the lens assembly 20, the electronic device 30 and the heat dissipation sheet metal 40 are received inside the receiving cavity 101. The receiving cavity 101 is configured as a sealed cavity to prevent the entering of dust and water. The housing assembly 10 is provided with a viewing window 102 facing the lens assembly 20 for the entrance of light. The housing assembly 10 is formed as a rotary body structure with a central axis A, and the optical axis of the lens assembly 20 is oriented in a same direction as the central axis A. In this embodiment, the optical axis of the lens assembly 20 is parallel to the central axis A.

The housing assembly 10 includes an inner shell 103 and an outer shell 104. The outer shell 104 is made of plastic. The outer shell 104 can be made of plastic material with high strength, good weather fastness, which can be used as a force-bearing part. The outer shell 104 mainly plays a protective function to meet the requirements of waterproofing, anti-riot, anti-corrosion and the like. The inner shell 103 is made of thermally conductive plastic, for example, formed by filling plastic matrix material with thermally conductive filler, to improve its thermal conduction performance. The inner shell 103 mainly plays a role of heat conduction and heat dissipation. The outer shell 104 covers the outer side of the inner shell 103. The shape of the outer shell 104 conforms to the shape of the inner shell 103 such that the outer surface of the inner shell 103 and the inner surface of the outer shell 104 fit and are engaged with each other to increase an engagement area and improve heat transfer efficiency. Meanwhile, the inner shell 103 and the outer shell 104 are kept fixed relative to each other through a connection structure to prevent the disengagement of the inner shell 103 from the outer shell 104. In some embodiments, the inner shell 103 and the outer shell 104 can be integrally formed by two-color injection molding, but the present disclose is not limited to this.

The camera 100 also includes a main board assembly 50 on which the electronic device 30 is provided. The electronic device 30 includes an image sensor and a processing chip. In this embodiment, the image sensor and the processing chip share the same printed circuit board. When in operation, the electronic device 30 generates heat that needs to be dissipated. The heat dissipation sheet metal 40 is engaged with the electronic device 30 and the inner shell 103, such that the heat conduction among the electronic device 30, the heat dissipation sheet metal 40 and the inner shell 103 is realized, allowing the heat generated by the electronic device 30 itself to be transferred to the inner shell 103 through the heat dissipation sheet metal 40, dispersed evenly by the inner shell 103, and further conducted to the outer shell 104, and then radiated to the outside through the outer shell 104 to achieve heat dissipation.

The camera 100 provided by the present disclosure adopts a plastic housing assembly 10, wherein the housing assembly 10 is a combination of a plastic outer shell 104 and an inner shell 103 which is made of thermally conductive plastic. The material of the outer shell 104 can meet the requirements of strength, waterproofing and anti-riot, and the material of the inner shell 103 can meet the requirements of heat dissipation, realizing low cost, good performance and environmentally friendly manufacturing process. Meanwhile, the inner shell 103 and the outer shell 104 are kept fixed relative to each other through a connection structure, which reduces or even avoids the risk of the disengagement of the inner shell 103 from the outer shell 104.

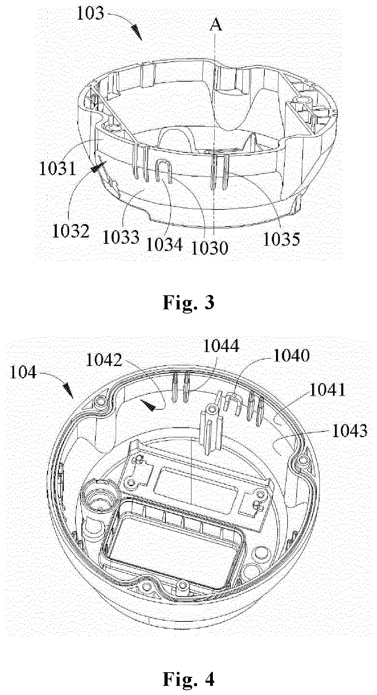

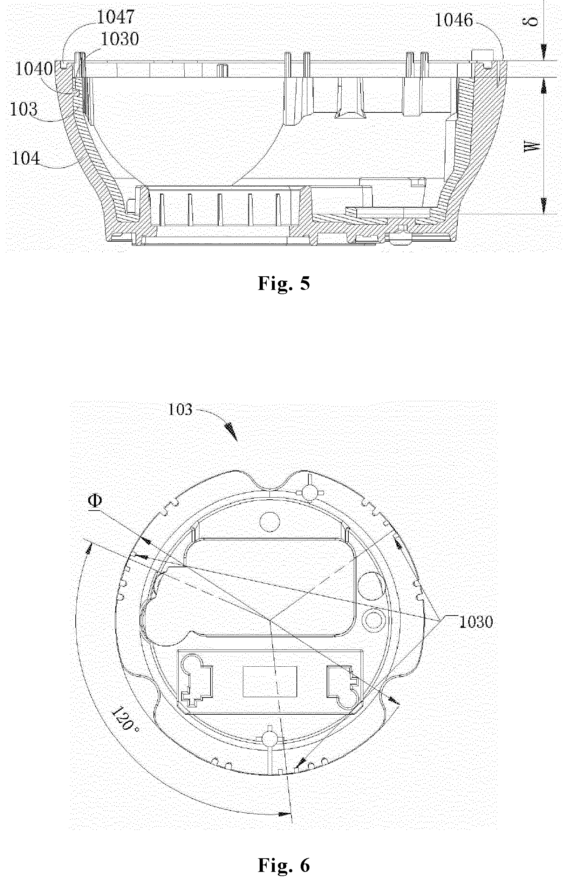

Please refer to Figs. 3 to 5. Fig. 3 is a schematic diagram of the inner shell 103. Fig. 4 is a schematic diagram of the outer shell 104. Fig 5 is a sectional view of the inner shell 103 and the outer shell 104 in an engaged state. In some embodiments, the connection structure includes a recessed part and a protruding part which are adapted in shape. One of the inner shell 103 and the outer shell 104 is provided with the recessed part, and the other of the inner shell 103 and the outer shell 104 is provided with the protruding part. The protruding part is provided inside the recessed part.

In some embodiments, the recessed part is implemented as a groove 1030, and the protruding part is implemented as a protrusion 1040. One of the inner shell 103 and the outer shell 104 is provided with the groove 1030, and the other of the inner shell 103 and the outer shell 104 is provided with the protrusion 1040. The protrusion 1040 is provided inside the groove 1030. This connection structure is simple and easy to implement. The groove 1030 and the protrusion 1040 can be integrally formed with the inner shell 103 and the outer shell 104 by injection molding, respectively. In this embodiment, the outer surface of the inner shell 103 is provided with the groove 1030, and the inner surface of the outer shell 104 is provided with the protrusion 1040, and vice versa.

To improve the stability of the connection between the inner shell 103 and the outer shell 104, multiple sets of connection structures can be provided. The multiple sets of connection structures are provided on the inner shell 103 and the outer shell 104 around the central axis A at intervals, with grooves 1030 corresponding to protrusions 1040 one by one. Specifically, the outer shell 104 includes an inner fitting and engaging surface 1042 that fits and is engaged with the inner shell 103, and the inner shell 103 includes an outer fitting and engaging surface 1032 that fits and is engaged with the outer shell 104. The inner fitting and engaging surface 1042 and the outer fitting and engaging surface 1032 fit and are engaged with each other, and extend around the central axis A. The multiple sets of connection structures are provided on the outer fitting and engaging surface 1032 and the inner fitting and engaging surface 1042 around the central axis A. For example, grooves 1030 are provided on the outer fitting and engaging surface 1032, and protrusions 1040 are provided on the inner fitting and engaging surface 1042. The multiple sets of connection structures can enable the inner shell 103 to be engaged with the outer shell 104 at multiple positions in a circumferential direction, ensuring the stability of the relative position of the inner shell 103 and the outer shell 104 and the reliability of the connection between the inner shell 103 and the outer shell 104.

In some embodiments, in the direction of the central axis A, an inner abruptly-changing surface with unequal radial sizes is formed in the inner surface of the outer shell 104, and an outer abruptly-changing surface with unequal radial sizes is formed in the outer surface of the inner shell 103. One of the recessed part and the protruding part is provided on the inner abruptly-changing surface, and the other of the recessed part and the protruding part is provided on the outer abruptly-changing surface. Specifically, the outer surface of the inner shell 103 includes an outer cylindrical surface 1031 and an outer conical surface 1033 extending around the central axis A and engaged with each other, and the outer abruptly-changing surface is formed at the boundary area between the outer cylindrical surface 1031 and the outer conical surface 1033. The inner surface of the outer shell 104 includes an inner cylindrical surface 1041 and an inner conical surface 1043 extending around the central axis A. The inner abruptly-changing surface is formed at the boundary area between the inner cylindrical surface 1041 and the inner conical surface 1043. The outer cylindrical surface 1031 fits and is engaged with the inner cylindrical surface 1041, and the outer conical surface 1033 fits and is engaged with the inner conical surface 1043. One of the groove 1030 and the protrusion 1040 is provided on the inner abruptly-changing surface, namely, at the boundary area between the inner cylindrical surface 1041 and the inner conical surface 1043, and the other of the groove 1030 and the protrusion 1040 is provided on the outer abruptly-changing surface, namely, at the boundary area between the outer cylindrical surface 1031 and the outer conical surface 1033. That is to say, parts of the groove 1030 and the protrusion 1040 are provided on the cylindrical surfaces, and the other parts of the groove 1030 and the protrusion 1040 are provided on the conical surfaces. Since the surfaces where the groove 1030 and the protrusion 1040 are located are in different orientations, which causes the groove 1030 and the protrusion 1040 to be located at different orientations in space, the groove 1030 and the protrusion 1040 can be matched and restricted at different orientations, such that the inner shell 103 and the outer shell 104 can restrict each other in multiple directions in space, and the fixation effect between them becomes better, which is beneficial to the stability of the relative position of the inner shell 103 and the outer shell 104. In this embodiment, the groove 1030 is provided at the boundary area between the outer cylindrical surface 1031 and the outer conical surface 1033 of the inner shell 103, and the protrusion 1040 is provided at the boundary area between the inner cylindrical surface 1041 and the inner conical surface 1043 of the outer shell 104.

The specific shapes of the groove 1030 and the protrusion 1040 are not limited and can be selected and set according to actual needs. For example, the groove can be configured as a circular groove, a W-shaped groove, a T-shaped groove and the like. In this embodiment, the groove 1030 is configured as a U-shaped groove, the protrusion 1040 is configured as a U-shaped protrusion, and the opening 1034 of the U-shaped groove faces the front end of the lens assembly 20. The U-shaped groove and the U-shaped protrusion cooperate to form an inverted-buckling structure by means of the bottom of these U-shaped structures. The disengagement of the inner shell 103 from the outer shell 104 can be prevented by the inverted-buckling structure when the lens assembly 20 is placed upward or downward. In addition, the U-shaped groove and U-shaped protrusion are formed in a simple manner and are easy to process and manufacture.

In addition, the connection structure also includes several strip-shaped grooves 1035 provided on the outer surface of the inner shell 103 and several strip-shaped protrusions 1044 provided on the inner surface of the outer shell 104. The strip-shaped protrusions 1044 are provided inside the strip-shaped grooves 1035 correspondingly to achieve the engagement between the inner shell 103 and the outer shell 104.

It should be noted that grooves and protrusions are only one implementation of the connection structure. In some other embodiments, there exists other implementations for the connection structure. For example, the connection structure can use thermally conductive glue, and the inner shell 103 and the outer shell 104 are adhesively fixed through thermally conductive glue.

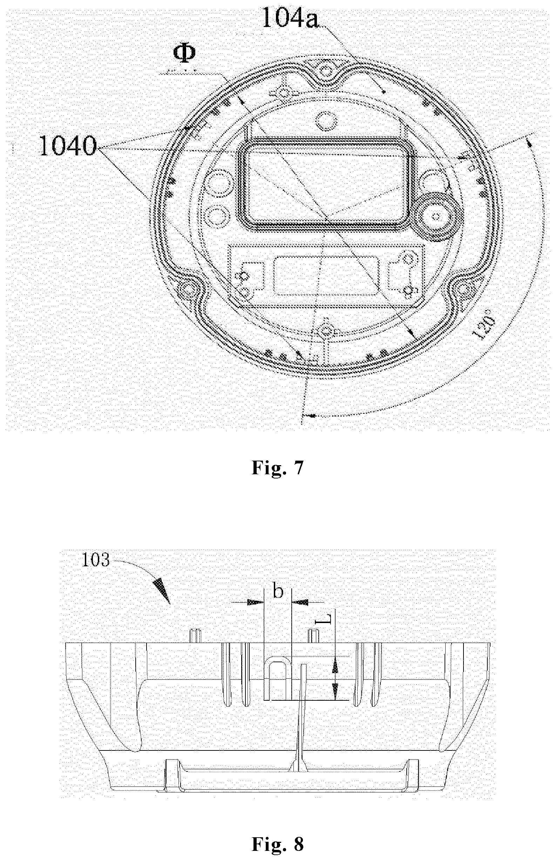

Please refer to Figs. 6 and 7. Fig. 6 shows an orthographic view of the inner shell 103 along the central axis from the front end to the rear end of the lens assembly. Fig. 7 shows an orthographic view of the outer shell 104 along the central axis from the rear end to the front end of the lens assembly. The front end of the lens assembly refers to an end of the lens assembly away from a control board assembly, and the rear end of the lens assembly refers to an end of the lens assembly close to the control board assembly.

In some embodiments, in order to simplify the structure of the inner shell 103 and the outer shell 104, three sets of connection structures may be provided and evenly distributed around the central axis A, with an interval of 120 degrees between every two sets. That is, three U-shaped grooves are evenly distributed on the inner shell 103 around the central axis A, and three U-shaped protrusions are evenly distributed on the outer shell 104 around the central axis A.

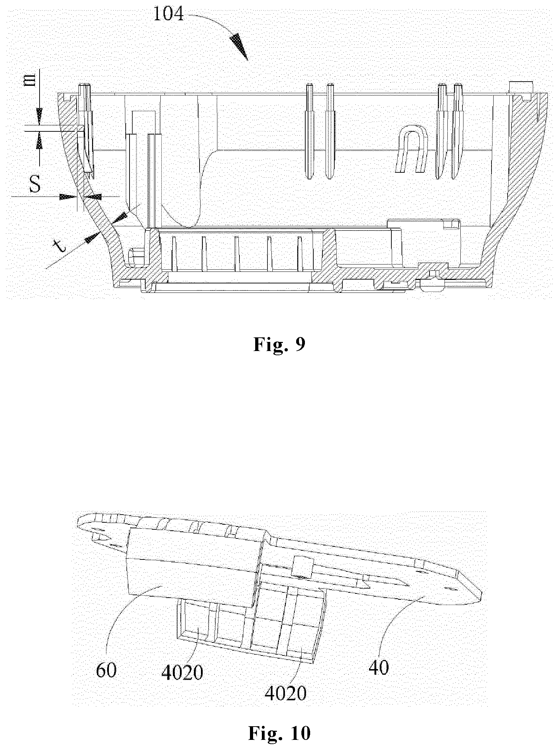

Please refer to Figs. 8 and 9. Fig. 8 is a schematic diagram of an outer surface of the inner shell 103. Fig 9 is a sectional view of the outer shell 104.

In some embodiments, the U-shaped groove has a length of L and a width of b. For example, a U-shaped groove with L=8mm, b=5mm and a depth of 1.2mm can be provided. The shape and size of the U-shaped protrusion are adapted to those of the U-shaped groove. The U-shaped protrusion is protruded by an amount S, S=1.2mm. The average wall thickness of the outer shell 104 is t. To facilitate smooth material flow during the injection molding of the outer shell 104, the thickness of the internal ribs on the outer shell is 60% or less of the average wall thickness t. In some embodiments, for example, t=2.2mm, and considering the strength of the internal ribs, the thickness of the internal ribs needs to be kept above 0.8mm, then the thickness of the internal ribs can be set between 0.8mm and 1.32mm. For example, the thickness of the internal ribs can be set to 1mm, and then the thickness of the U-shaped protrusion can be set to m=1mm, to meet the design requirements.

In a specific embodiment, when three U-shaped grooves are evenly distributed in the axial direction on the outer cylindrical surface 1031 of the inner shell 103 with a diameter Φ of 76 mm, the distance between two adjacent U-shaped protrusions along the circumferential direction of the outer shell 104 shall be set within the range from 70mm to 80mm. In this case, to meet the requirements, the circumferential distance between the U-shaped protrusions on the outer shell 104 is 76×π÷3=79.6mm.

In combination with Figs. 2 and 10, Fig. 10 is a schematic diagram showing the engagement of the heat dissipation sheet metal 40 with a thermally conductive pad 60.

The heat dissipation sheet metal 40 includes a base plate 401 and an end plate 402 located at an end of the base plate 401. The end plate 402 is bent relative to the base plate 401. The base plate 401 is engaged with the electronic device 30, and the end plate 402 is engaged with the inner shell 103 and conforms to the inner shell 103 in shape, thereby ensuring effective heat transfer between the end plate 402 and the inner shell 103. In some embodiments, both ends of the base plate 401 are provided with end plates 402, and each end plate 402 is engaged with the inner shell 103, thereby realizing multiple heat transfer paths in different directions from the base plate 401 to respective end plates 402, speeding up the heat dissipation rate.

In order to facilitate the bending formation of the end plate 402, the end plate 402 includes a plurality of branch sheet metals 4020 that are provided side by side and spaced apart from each other. The branch sheet metals 4020 can reduce the stiffness of the end plate 402 and increase the elasticity of the end plate 402. When engaged with the inner shell 103, the branch sheet metals 4020 can better fit and engage with the inner surface of the inner shell 103 through its own adaptive deformation.

The camera 100 also includes a thermally conductive pad 60 which is clamped between the end plate 402 and the inner shell 103. The end plate 402 is engaged with the inner shell 103 through the thermally conductive pad 60. The thermally conductive pad 60 can compensate for the gap between the end plate 402 and the inner shell 103 caused by processing errors, achieving effective heat transfer. The thermally conductive pad 60 may be made of flexible thermally conductive material.

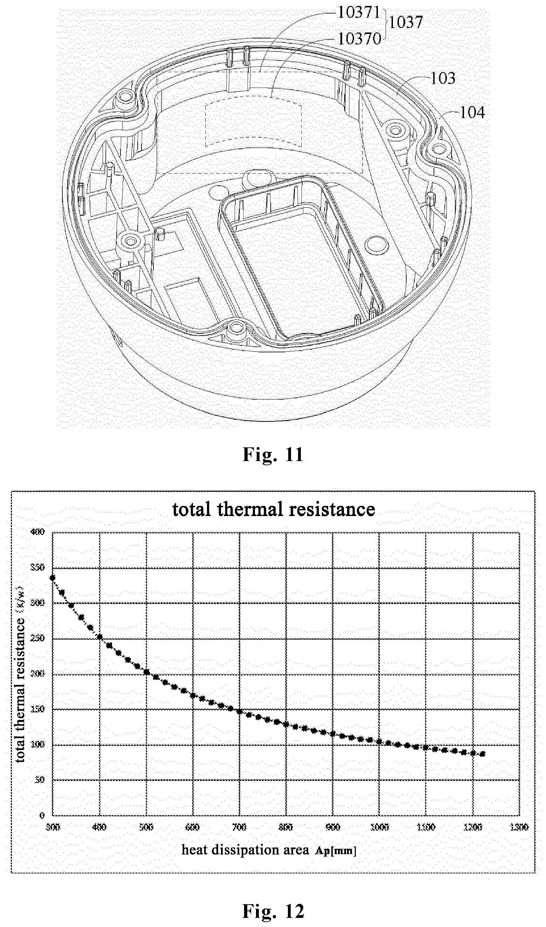

Please refer to Fig. 11, which is a schematic diagram of a heat dissipation surface 1037 on one side of the inner shell 103.

In some embodiments, the inner shell 103 includes the heat dissipation surface 1037 on one side. The area of the heat dissipation surface 1037 is a sum of an area of a heat transfer surface 10370 of the inner shell 103 in contact with the thermally conductive pad 60 and an area of a heat diffusion surface 10371 located at the periphery of the heat transfer surface 10370. The optimal value of the area $A_p$ of the heat dissipation surface 1037 is determined based on $R_a$:

$$R_a = R_c + R_{sp} + R_h \qquad \text{(Formula 1)}$$

$$R_c = D/(k * A_p)$$ (Formula 2)

$$R_{sp} = \frac{A_p^{0.5} - A_S^{0.5}}{k \cdot (\pi \cdot A_p \cdot A_S)^{0.5}} \cdot \frac{\lambda \cdot k \cdot A_p \cdot R_c + \tanh(\lambda \cdot D)}{1 + \lambda \cdot k \cdot A_p \cdot R_c \cdot \tanh(\lambda \cdot D)}$$ (Formula 3)

$$R_h = 1/(h A_p)$$ (Formula 4)

wherein $R_a$ is a total thermal resistance, $R_c$ is a heat conduction thermal resistance in a normal direction, $R_{sp}$ is a diffusion thermal resistance, $R_h$ is a heat convection thermal resistance, $\lambda = \frac{\pi^{\frac{3}{2}}}{A_p^{0.5}} + \frac{1}{A_S^{0.5}}$, $A_S$ is the unilateral engaging area of the heat dissipation sheet metal and the inner shell, k is the thermal conductivity of the inner shell, D is the thickness of the inner shell, and h is a convection heat transfer coefficient.

Wherein, $A_S$, k, D, and h are selected based on empirical values. Then $R_c$, $R_{sp}$ and $R_h$ are all functions of $A_p$ in this case. $A_p$ is selected within a certain range, and the fitting curve of $R_a$ and $A_p$ is calculated as shown in Fig. 11, from which the optimal value of $A_p$ is derived.

In this embodiment, the heat transfer surface 10370 is located in the central area of the heat dissipation surface 1037. The heat generated by the electronic device 30 is firstly concentrated and transferred to the heat transfer surface 10370, and then diffused from the heat transfer surface 10370 to the heat diffusion surface 10371 to increase the heat dissipation area, realizing the synchronous heat dissipation for the entire heat dissipation surface 1037, and the heat is further transferred to the outer shell 104 through the entire heat dissipation surface 1037. Therefore, by determining the optimal value of the area $A_p$ of the heat dissipation surface 1037, it can be ensured that the heat transferred from the heat dissipation sheet metal 40 to the inner shell 103 through the thermally conductive pad 60 can be effectively diffused.

In a specific embodiment, As = 300mm$^2$, k = 3w/(m·k), D=1.8mm, h=10w/(m$^2$·k) are selected. According to Fig. 12, it can be seen that when $A_p$=900mm$^2$, the total thermal resistance $R_a$ decreases slowly. Comprehensively considering the overall size of the housing assembly 10, a preferred value of $A_p$=900mm$^2$ can be derived.

In some embodiments, the height dimension W of the inner shell 103 in the direction of the central axis A is determined according to the following formula:

$$h = 0.59\beta_1 (\frac{g\alpha_V \Delta t}{\alpha v W})^{0.25}$$ (Formula 5)

wherein h is the convection heat transfer coefficient, g is the acceleration of gravity, $\alpha_V$ is a cubic expansion coefficient, v is a dynamic viscosity coefficient, $\Delta t$ is an excess temperature, $\alpha$ is a thermal diffusivity, and $\beta1$ is the thermal conductivity of air inside the inner shell, wherein, g, $\alpha_V$, v, $\Delta t$, $\alpha$ and $\beta1$ are selected based on empirical values. It can be seen from Formula 5 that in order to maximize the heat dissipation performance and increase the convection heat transfer coefficient h, the height dimension W of the inner shell 103 needs to be reduced. That is to say, the height dimension W is negatively correlated with the convection heat transfer coefficient of the camera housing assembly 10. Taking the placement state of the camera 100 in Fig 1 as a reference direction, the height dimension W may also be called the longitudinal height W. Based on the limitation of space layout and appearance, the optimal value of height dimension W is estimated. In an embodiment in which the preferred value of $A_p$ is 900mm$^2$, the height dimension W can be set to 25mm.

In this embodiment, the heat dissipation sheet metal 40 is engaged with two parts of the inner shell 103 through the end plates 402 provided at both ends of the heat dissipation sheet metal 40. Based on this, two thermally conductive pads 60 are provided, and are in one-to-one correspondence with the two end plates 402. That is to say, the two end plates 402 are respectively engaged with the inner shell 103 through the thermally conductive pads 60 to form two heat dissipation surfaces 1037. The optimal value of the area $A_p$ of each heat dissipation surface 1037 can be determined in the same manner as above. The areas $A_p$ of the two heat dissipation surfaces 1037 may be the same or different.

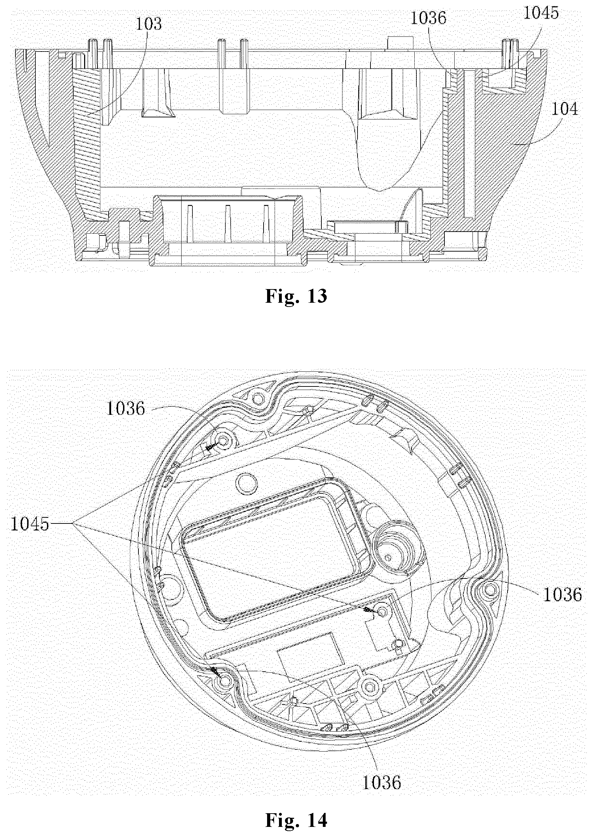

Please refer to Figs. 13 and 14. Fig. 13 is another sectional view of the inner shell 103 and the outer shell 104 in an engaged state. Fig. 14 is a top view of the inner shell 103 and the outer shell 104 in the engaged state.

In some embodiments, the outer shell 104 includes a fixing post 1045 for fixing components received inside the housing assembly 10, such as the lens assembly 20, the main board assembly 50, and a fill light. The inner shell 103 includes a reinforced surrounding wall 1036 that covers or partially covers the outer side of the fixing post 1045. That is to say, the fixing post 1045 is covered by the reinforced surrounding wall 1036, which not only increases the friction between the inner shell 103 and the outer shell 104 in the engaged state, ensuring that the inner shell 103 and the outer shell 104 fit and are engaged with each other more closely, but also enhances the strength of the fixing post 1045 and enhances the fixation reliability. The fixing post 1045 can be provided with an unthreaded hole or threaded hole to facilitate the screwing in of screws or bolts. The fixing post 1045 can be integrally formed with the outer shell 104, and the reinforced surrounding wall 1036 can be integrally formed with the inner shell 103.

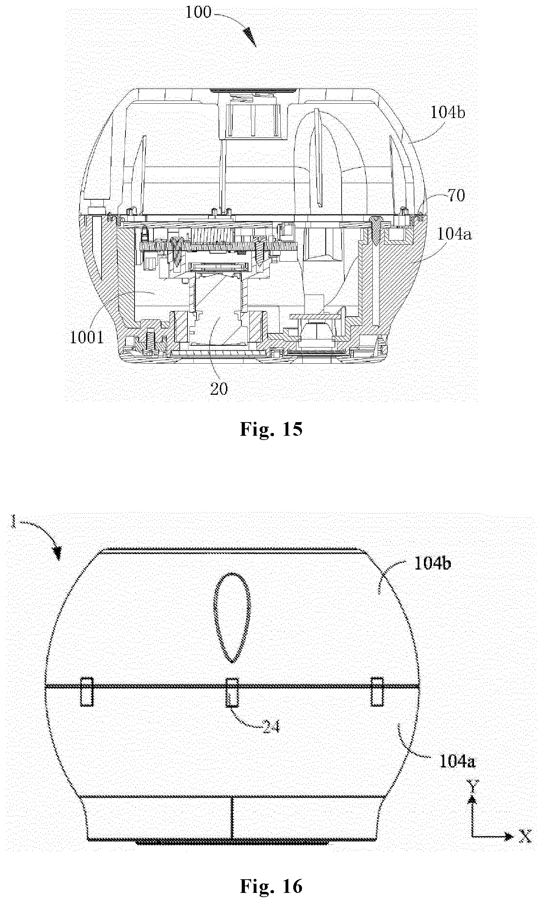

Please refer to Fig. 15, which is a sectional view of another part of the camera 100.

The outer shell 104 includes a first outer shell 104a and a second outer shell 104b that are separately provided, wherein the first outer shell 104a is provided with a viewing window 102 facing the lens assembly 20. The inner shell 103 is attached to the inner surface of the first outer shell 104a. The first outer shell 104a covers the inner shell 103 to form a first receiving cavity 1001 with an opening. The second outer shell 104b is sealingly engaged with the first outer shell 104a at the opening side, to together form and enclose a sealed receiving cavity 101. The second outer shell 104b can be set as a single-layer structure. The first outer shell 104a is closer to the lens assembly 20 and the electronic device 30 than the second outer shell 104b. Therefore, the inner shell 103 is only attached to the inner surface of the first outer shell 104a, which can reduce the volume of the inner shell 103 and save material on one hand, and can reduce the volume of the heat dissipation sheet metal 40, shorten the thermal conduction path between the heat dissipation sheet metal 40 and the inner shell 103, and improve the heat dissipation effect on the other hand.

The camera 100 also includes a sealing ring 70, which is clamped between the first outer shell 104a and the second outer shell 104b to realize the sealing engagement of the first outer shell 104a and the second outer shell 104b. In some embodiments, as shown in Fig. 5, the first outer shell 104a includes an engagement surface 1046 engaged with the second outer shell 104b. There is a height difference $\delta$ between an end of the inner shell 103 close to the second outer shell 104b and the engagement surface 1046 to form a gap for accommodating the sealing ring 70. The engagement surface 1046 is an end surface of the first outer shell 104a at the opening end, and the end surface of the first outer shell 104a at the opening end is higher than the end surface of the inner shell 103. In some embodiments, the height difference between the end surface of the first outer shell 104a and the end surface of the inner shell 103 is greater than 3 mm. In an alternative embodiment, the height difference $\delta=3.1$ mm.

The engagement surface 1046 is also provided with a sealing ring installation groove 1047 (refer to Fig. 5). The sealing ring 70 is placed inside the sealing ring installation groove 1047 and surrounds the periphery of the first receiving cavity 1001, so that the first outer shell 104a and the second outer shell 104b are sealingly engaged.

The connection structure includes a first connection structure provided on the inner surface of the first outer shell 104a, and a second connection structure provided on the outer surface of the inner shell 103. The first connection structure receives the second connection structure, so that the outer surface of the inner shell 103 and the inner surface of the first outer shell 104a form a thermal conduction channel. In some embodiments, one of the first connection structure and the second connection structure is provided with a recessed part, and the other of the first connection structure and the second connection structure is provided with a protruding part adapted to the recessed part, and the recessed part receives the protruding part. The recessed part is the groove 1030, and the protruding part is the protrusion 1040.

In this embodiment, the first connection structure is the protruding part, that is, the protrusion 1040, and the second connection structure is the recessed part, that is, the groove 1030, and the recessed part receives the protruding part.

In some examples, the heat dissipation sheet metal 40 includes a base plate 401 and an end plate 402 provided on the edge of the base plate 401 and abutting against the inner shell 103. The inner surface of the inner shell 103 is an arc surface, and the outer side surface of the end plate 402 is an arc surface. The outer side surface of the end plate 402 fits and is engaged with the inner surface of the inner shell 103.

In some embodiments, the ratio of the area of the inner surface of the inner shell 103 to the area of the outer side surface of the end plate 402 is not less than 1:3.

In some embodiments, the camera includes an inner shell 103 made of thermally conductive plastic material and a first outer shell 104a made of plastic material, wherein the first outer shell 104a covers the inner shell 103 to form a first receiving cavity 1001 with an opening, the inner shell 103 is defined such that at the end surface on the opening side, the end surface of the first outer shell 104a is higher than the end surface of the inner shell 103; the heat dissipation sheet metal 40 includes a base plate 401 and an end plate 402 located at the end of the base plate 401; the lens assembly 20, supported by the base plate 401 of the heat dissipation sheet metal 40, and the heat dissipation sheet metal 40 are both provided in the receiving cavity 101, so that the end plate 402 of the heat dissipation sheet metal 40 is in surface contact with the inner surface of the inner shell 103, so that the heat generated by the lens assembly 20 flows through the base plate 401, the end plate 402, the inner shell 103 and the first outer shell 104a in sequence, and is dissipated to the outside.

In some embodiments, the end plate 402 extends in a same direction as the optical axis of the lens assembly 20, and the end plate 402 extends in a direction away from the opening of the first receiving cavity 1001.

The second aspect of the present disclosure also provides another camera, including a housing assembly, a control board assembly and a lens assembly. The housing assembly includes an outer shell made of engineering plastics and an inner shell made of thermally conductive plastics, and the outer shell includes a first outer shell and a second outer shell. The first outer shell and the second outer shell are assembled to form a receiving cavity. The first outer shell is provided with a viewing window, and the control board assembly and the lens assembly are assembled in the receiving cavity and located inside the first outer shell. The lens assembly is assembled to the control board assembly and extends from the control board assembly toward the viewing window. The first outer shell and the inner shell are integrally formed by two-color injection molding. The first outer shell covers the outer surface of the inner shell, and the control board assembly is in heat conduction with the inner shell.

In the present disclosure, the housing assembly adopts a combination of the outer shell made of plastic material and the inner shell made of thermally conductive plastic material. The outer shell includes the first outer shell and the second outer shell, and the first outer shell and the inner shell are integrally formed by two-color injection molding. The materials of the first outer shell and the second outer shell can meet the requirements for strength, waterproofing and anti-riot, and the material of the inner shell meets the heat dissipation requirements, thereby achieving the purpose of low cost, good performance and an environmentally friendly manufacturing process. Meanwhile, the inner shell and the first outer shell are integrally molded through two-color injection molding, which reduces or even avoids the risk of the disengagement of the inner shell from the first outer shell.

The camera of the present disclosure will be described in detail below with reference to the accompanying drawings in the present disclosure. Features in the following embodiments and implementations can be combined with each other if no conflict exists.

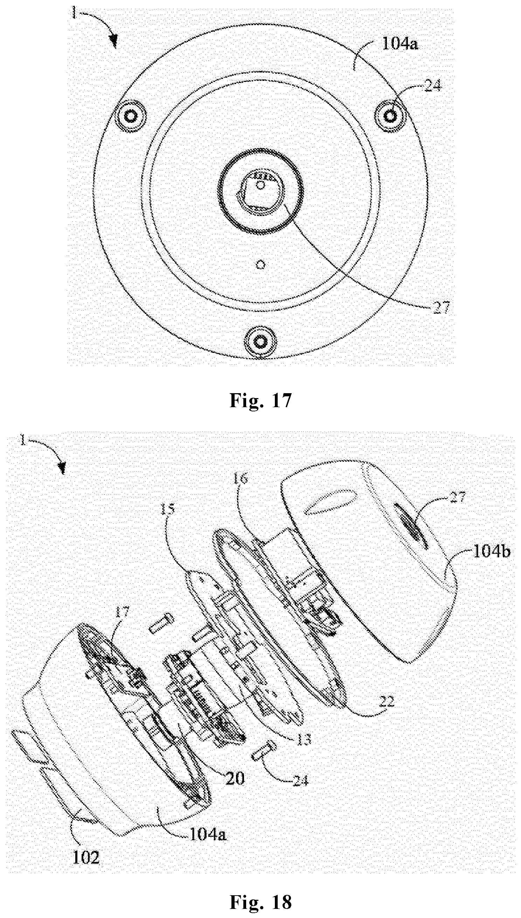

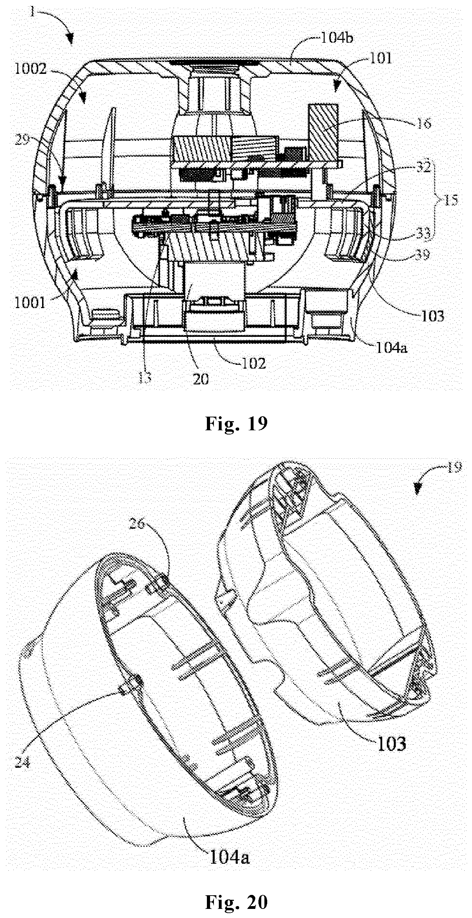

Fig. 16 shows a schematic structural diagram of an embodiment of the camera 1 of the present disclosure. Fig. 17 shows a schematic top view of structure of the camera 1 shown in Fig. 16. Fig. 18 shows an exploded view of the camera 1 shown in Fig. 16. Fig. 19 shows a schematic sectional view of the camera 1 shown in Fig. 16. As shown in Figs. 16 to 19, the camera 1 can be a camera of a different type. In this embodiment, the camera 1 may be a conch camera, which is not limited in the present disclosure.

Specifically, the camera 1 includes a housing assembly 10, a control board assembly 13, a lens assembly 20, a heat dissipation assembly 15, a power board 16 and a lamp board 17. The heat dissipation assembly 15 may also be the aforementioned heat dissipation sheet metal 40. The housing assembly 10 includes an outer shell 104 and an inner shell 103. The outer shell 104 includes a first outer shell 104a and a second outer shell 104b, and the first outer shell 104a and the inner shell 103 form a two-color injection molded shell 19. The second outer shell 104b and the first outer shell 104a are assembled to form a receiving cavity 101. The control board assembly 13, the lens assembly 20, the heat dissipation assembly 15, the power board 16 and the lamp board 17 are all assembled inside the receiving cavity 101. The lens assembly 20 is assembled to the control board assembly 13 to be electrically connected to the control board assembly 13. The control board assembly 13 is configured to drive and control the operation of the lens assembly 20. The control board assembly 13 is electrically connected to the lamp board 17, and the control board assembly 13 is configured to drive and control the operation of the lamp board 17. The control board assembly 13 is electrically connected to the power board 16, and the power board 16 is configured to supply power to the control board assembly 13.

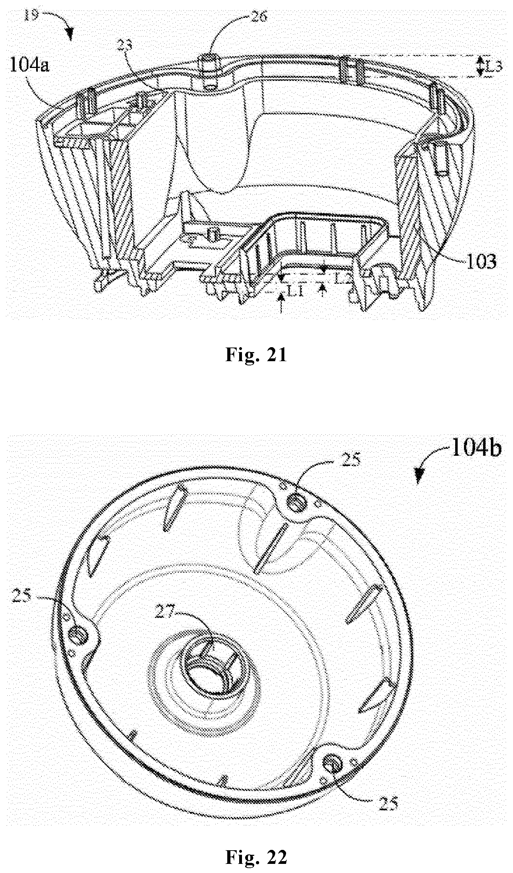

Fig. 20 shows a schematic structural diagram of an embodiment of the two-color injection molded shell 19 of the camera 1 shown in Fig. 16. Fig. 21 shows a schematic view of partial structure of the two-color injection molded shell 19 of the camera 1 shown in Fig. 20. As shown in Figs. 20 and 21, at least one of the second outer shell 104b and the first outer shell 104a forms a two-color injection molded shell 19 with the inner shell 103. The two-color injection molded shell 19 includes the inner shell 103 made of thermally conductive plastic and the first outer shell 104a or the second outer shell 104b made of engineering plastic. The thermally conductive plastic and the engineering plastic are molded through a two-color injection molding process, so that the thermally conductive plastic and the engineering plastic are permanently engaged or bonded to each other to form the one-piece two-color injection molded shell 19. Since the thermally conductive plastic has good heat dissipation performance and is relatively brittle, it may not be easy to be fixed as an outer shell; further, the smoothness of the thermally conductive plastic is not high, and its appearance is not good-looking. Therefore, in order to meet the heat dissipation and the appearance as well as the structural mechanical performance requirements of the product at the same time, the first outer shell 104a or the second outer shell 104b covers the outer surface of the inner shell 103 by using a two-color injection molding process, so that the thermally conductive plastic is in sufficient contact with the engineering plastic. Since the thermally conductive plastic dissipates heat evenly, it can meet the heat dissipation requirements of the camera 1. Since the engineering plastic has a high rigidity, stable mechanical properties and a high strength, it is easy to be fixed, and the engineering plastic has smooth and shiny surface and thus can meet the appearance requirements. As such, the application scene of the camera 1 can be expanded. The above-mentioned two-color injection molding process is to form an integral two-color injection molded shell 19 from thermally conductive plastic and engineering plastic through two separate injection moldings.

In some embodiments, each of the second outer shell 104b and the first outer shell 104a is formed into a two-color injection molded shell 19 with the inner shell 103. The inner shell 103 made of thermally conductive plastic is provided in the inner sides of both the second outer shell 104b and the first outer shell 104a. The receiving cavity 101 formed in the second outer shell 104b and the first outer shell 104a can be a convection heat dissipation cavity, which can increase the heat dissipation area of the receiving cavity 101 and improve the heat dissipation performance of the camera 1.

In some embodiments, one of the second outer shell 104b and the first outer shell 104a is formed into a two-color injection molded shell 19 with the inner shell 103. In this way, the main heat-generating components of the camera 1 can be provided inside the two-color injection molded shell, which can effectively reduce the product cost while taking into account the heat dissipation requirements of the camera 1 thus enhancing the market competitiveness of the camera 1.

In this embodiment, the first outer shell 104a forms a two-color injection molded shell 19 with the inner shell 103. The first outer shell 104a of the two-color injection molded shell 19 is made of engineering plastic, ensuring that the appearance of the camera 1 is consistent with that of a conventional camera. The inner shell 103 of the two-color injection molded shell 19 is made of thermally conductive plastic. The thermally conductive plastic has a better thermal conduction performance than the engineering plastic. The thermal conduction performance of the thermally conductive plastic is mainly measured by the thermal conductivity. In some embodiments, the thermal conductivity of the thermally conductive plastic can be 1 to 5w/(m.k). In some embodiments, the thermal conductivity of the thermally conductive plastic can be 1w/(m.k) or 2w/(m.k) or 3w/(m.k) or 4w/(m.k) or 5w/(m.k), and preferably, is 3w/(m.k), wherein, "K" is the unit of an absolute temperature, which can be replaced by °C, "W" refers to the unit of thermal power, and "m" represents meter as the unit of length.

In some embodiments, the maximum thickness L1 of the first outer shell 104a is at least 2.2 mm to meet the minimum strength requirement of the first outer shell 104a. In some embodiments, the maximum thickness L2 of the inner shell 103 does not exceed 1.8 mm. The maximum thickness L2 of the inner shell 103 should neither be too large nor too small. If the maximum thickness L2 is set too large, the heat dissipation space inside the receiving cavity 101 will be reduced, which is not conducive to heat dissipation. If the maximum thickness L2 is set too small, the heat dissipation requirements cannot meet. Therefore, setting the maximum thickness L2 of the inner shell 103 to 1.8 mm at most can reduce the cost while meeting heat dissipation requirements, and has better economic benefits.

In some embodiments, the camera 1 further includes a seal 22 (as shown in Fig. 18). The upper edge of the inner shell 103 is lower than the upper edge of the first outer shell 104a, forming a step 23 (as shown in Fig. 21). The seal 22 used to seal the gap between the second outer shell 104b and the first outer shell 104a, is assembled to the step 23. By setting the upper edge of the inner shell 103 lower than the upper edge of the first outer shell 104a, it is convenient for production to form the step 23, and for assembling the seal 22 between the second outer shell 104b and the first outer shell 104a so as to ensure the sealing inside the receiving cavity 101, which can improve the sealing of the entire camera 1. The seal 22 is the aforementioned sealing ring 70. The sealing ring has good elasticity and resilience, good sealing performance and low cost.

In some embodiments, the dimension L3 by which the height of the inner shell 103 is reduced compared to the height of the first outer shell 104a may range from 1 mm to 5 mm. In some embodiments, the dimension L3 by which the height of the inner shell 103 is reduced compared to the height of the first outer shell 104a may be 1mm or 2mm or 3mm or 4mm or 5mm, and preferably, is 3 mm. The dimension of the seal 22 is adapted to the aforementioned height-reduced dimension L3. When the seal 22 is assembled to the first outer shell 104a, the upper edge of the seal 22 is slightly higher than the upper edge of the first outer shell 104a. When the second outer shell 104b and the first outer shell 104a are assembled, the seal 22 is compressed and in interference fit with the second outer shell 104b, thus ensuring better sealing between the second outer shell 104b and the first outer shell 104a.

In some embodiments, the thermally conductive plastic is obtained by filling the polymer matrix material evenly with thermally conductive fillers, so as to improve its thermal conduction performance. The thermal conduction performance of the thermally conductive plastic is significantly improved compared to ordinary plastics. In some embodiments, the engineering plastic may be polycarbonate, which is not limited in the present disclosure.

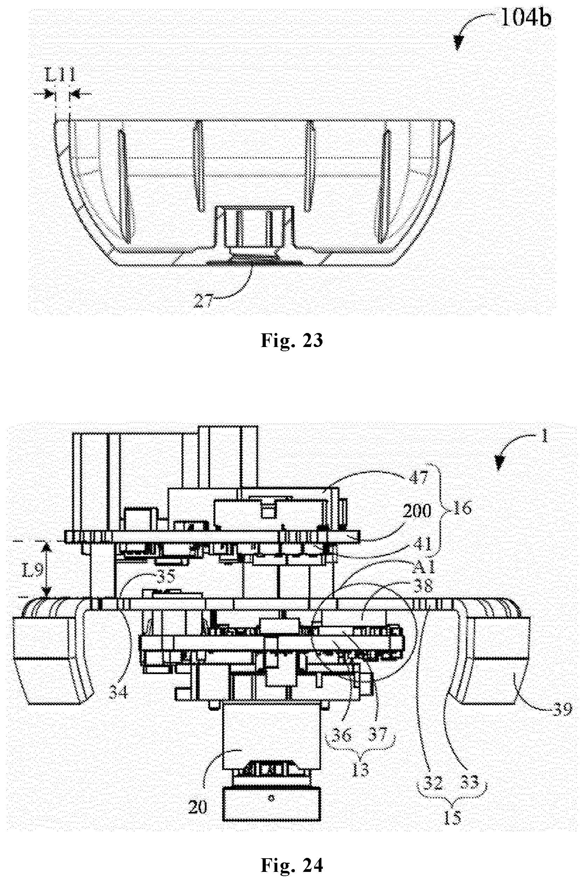

Fig. 22 shows a schematic structural diagram of an embodiment of the second outer shell 104b of the camera 1 shown in Fig. 16. Fig. 23 shows a schematic sectional view of the second outer shell 104b of the camera 1 shown in Fig. 22. As shown in Figs. 22 and 23, the material of the second outer shell 104b is the engineering plastic. The engineering plastic can be polycarbonate and has a shape similar to that of an ordinary camera shell. In this embodiment, both the second outer shell 104b and the first outer shell 104a are spherical structures. The second outer shell 104b is adapted to the first outer shell 104a. By the cooperation of the second outer shell 104b made of engineering plastic and the two-color injection molded shell 19 (formed by the first outer shell 104a and the inner shell 103) made by the two-color injection molding process, the product cost is effectively reduced while taking into account the heat dissipation requirements of the camera 1, thus enhancing the market competitiveness of the camera 1.

By providing the first outer shell 104a and the inner shell 103 as the two-color injection molded shell 19, most of the heat generated in the second outer shell 104b and the first outer shell 104a is dissipated through the inner shell 103 of the two-color injection molded shell 19. In addition, a convection heat dissipation cavity is formed inside the receiving cavity 101 by the inner surface of the second outer shell 104b and the inner surface of the inner shell 103 of the two-color injection molded shell 19. Through convection effects, part of the heat is dissipated to the inner wall of the second outer shell 104b, and then transferred to the outer wall of the second outer shell 104b through the heat conduction of the second outer shell 104b. Therefore, the flatness of the second outer shell 104b also affects heat transfer. The flatness of the second outer shell 104b is thus set to 0.1 mm at most to make the inner wall of the second outer shell 104b flat, reducing the contact thermal resistance with the inner shell 103, and facilitating heat transfer to the second outer shell 104b.

In some embodiments, the maximum thickness L11 of the second outer shell 104b is at least 2 mm. The maximum thickness of the second outer shell 104b can be obtained by using formula 6 for calculating the heat conduction and heat transfer thermal resistance of the second outer shell 104b. For example, if the size of the second outer shell 104b does not change, the heat conduction thermal resistance of the second outer shell 104b is calculated as follows:

$$R = \frac{1}{4\pi\lambda}\left(\frac{1}{r-d1} - \frac{1}{r}\right) \qquad \text{(Formula 6)}$$

It can be seen that the thermal resistance R is positively correlated with the wall thickness d1 of the second outer shell 104b. In order to reduce the thermal resistance R and meet the structural strength and hardness performance, the maximum thickness of the second outer shell 104b is set to at least 2 mm, which can ensure the hardness and rigidity requirements of the second outer shell 104b and unbreak.

In the embodiment shown in Figs. 16 to 23, the camera 1 further includes a fixing member 24, and a first fixing hole 25 is provided on the edge of the second outer shell 104b facing the first outer shell 104a. A second fixing hole 26 is provided on the edge of the first outer shell 104a facing the second outer shell 104b. By passing the fixing member 24 through the first fixing hole 25 and the second fixing hole 26 in sequence, the second outer shell 104b and the first outer shell 104a are assembled and fixed (as shown in Figs. 16 and 17 ). In some embodiments, the fixing member 24 may be a bolt, which is of simple structure, low cost, and is stable and reliable. In some embodiments, multiple fixing members 24, first fixing holes 25, and second fixing holes 26 may be provided, and positions and numbers of the multiple fixing members 24, first fixing holes 25, and second fixing holes 26 are set in correspondence with each other, which is not limited in the present disclosure.

In some embodiments, the top of the second outer shell 104b is provided with a through hole 27 (as shown in Figs. 17, 22 and 23). The through hole 27 is to be passed through by external power lines or control lines (not shown) so as to electrically connect the power board 16 with the control board assembly 13 provided inside the receiving cavity 101. In some embodiments, the first outer shell 104a is provided with a viewing window 102. The lens assembly 20 is assembled to the control board assembly 13 and extends from the control board assembly 13 toward the viewing window 102. The lens assembly 20 acquires external images through the viewing window 102. The viewing window 102 may also be provided with glass to protect the lens assembly 20.

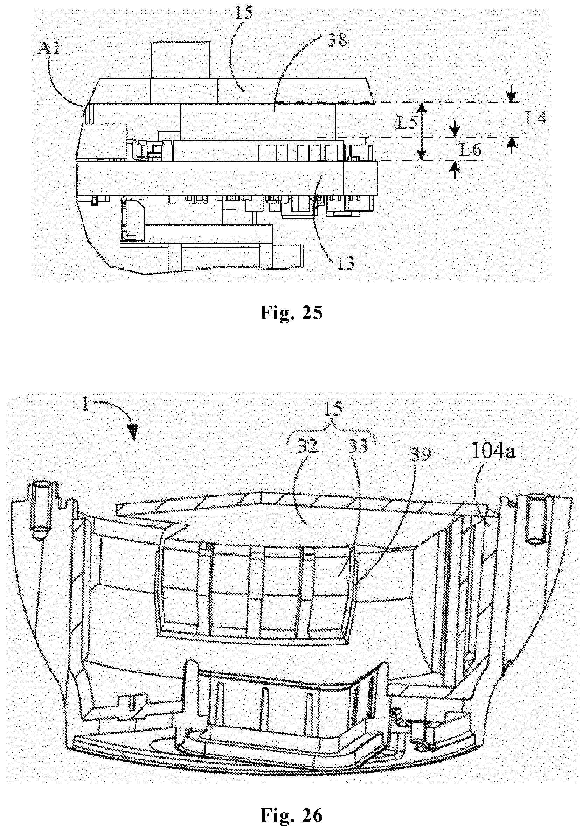

Fig. 24 shows a schematic structural diagram showing the assembling of the control board assembly 13, the lens assembly 20, the heat dissipation assembly 15 and the power board 16 of the camera 1 shown in Fig. 16. Fig. 25 shows a partial enlarged view at A1 of the camera 1 shown in Fig. 24. As shown in Figs. 18, 19, 24 and 25, the power board 16 and the control board assembly 13 are both provided on the heat dissipation assembly 15. In this embodiment, the power board 16 and the control board assembly 13 are respectively provided on both sides of the heat dissipation assembly 15. The power board 16 is located inside the second outer shell 104b, and the control board assembly 13 and the lens assembly 20 are located inside the first outer shell 104a.

In some embodiments, the heat dissipation assembly 15 is provided at the opening 29 where the first outer shell 104a and the second outer shell 104b are engaged with each other, and the heat dissipation assembly 15 at least partially covers the opening 29 (as shown in Fig. 19). In an axial direction Y of the first outer shell 104a, the maximum size is at the opening 29 where the second outer shell 104b and the first outer shell 104a are engaged with each other. The heat dissipation assembly 15 is assembled at the opening 29 to ensure that the heat dissipation surface of the heat dissipation assembly 15 is the largest. This ensures that the contact area among the power board 16, the control board assembly 13 and the heat dissipation assembly 15 is maximized, thereby improving the heat dissipation effect of the power board 16 and the control board assembly 13. After assembling the heat dissipation assembly 15 with the first outer shell 104a, the receiving cavity 101 is divided into a first receiving cavity 1001 and a second receiving cavity 1002. The enclosing by the heat dissipation assembly 15 and the second outer shell 104b leads to the formation of the second receiving cavity 1002, and the power board 16 is provided inside the second receiving cavity 1002. The power board 16 dissipates heat through the convection heat dissipation space formed by the heat dissipation assembly 15 and the inner wall of the second outer shell 104b. The enclosing by the heat dissipation assembly 15 and the first outer shell 104a leads to the formation of the first receiving cavity 1001, and the control board assembly 13 and the lens assembly 20 are provided inside the first receiving cavity 1001. The control board assembly 13 and the lens assembly 20 dissipate heat through the convection heat dissipation space formed by the heat dissipation assembly 15 and the inner wall of the inner shell 103.

For the entire camera 1, the control board assembly 13, the lens assembly 20 and the power board 16 all generate heat, and the heat is mainly generated by the control board assembly 13 and the lens assembly 20. Therefore, the first outer shell 104a and the inner shell 103 are configured as a two-color injection molded shell. The heat dissipation assembly 15 is assembled with the two-color injection molded shell 19 and connected to the inner shell 103. The power board 16 and the control board assembly 13 are both connected to the inner shell 103 and conduct heat through the inner shell 103. The control board assembly 13 is assembled to the heat dissipation assembly 15 for heat conduction with the inner shell 103 through the heat dissipation assembly 15. The heat generated by the control board assembly 13 and the lens assembly 20 is transferred to the inner shell 103 through the heat dissipation assembly 15, and the heat is conducted using the thermally conductive plastic of the inner shell 103. The power board 16 is assembled to the heat dissipation assembly 15 and can also be connected to the inner shell 103 through the heat dissipation assembly 15. Transferring the heat inside the second receiving cavity 1001 can improve the heat dissipation performance of the camera 1 and prolong the service life of the camera 1. In this application scenario, the second outer shell 104b does not need to be improved, and the product cost can be effectively reduced while taking into account the heat dissipation requirements of the camera 1, thus enhancing the market competitiveness of the camera 1.

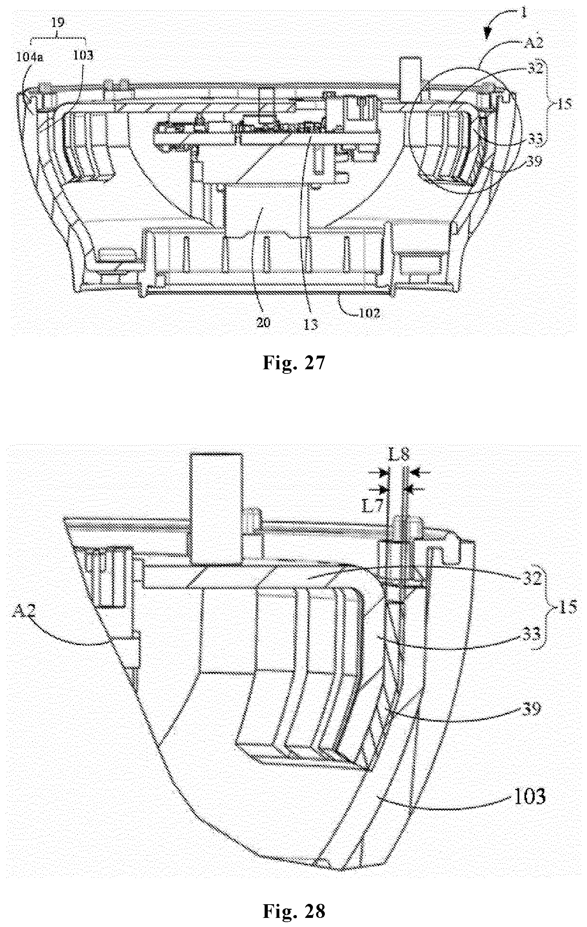

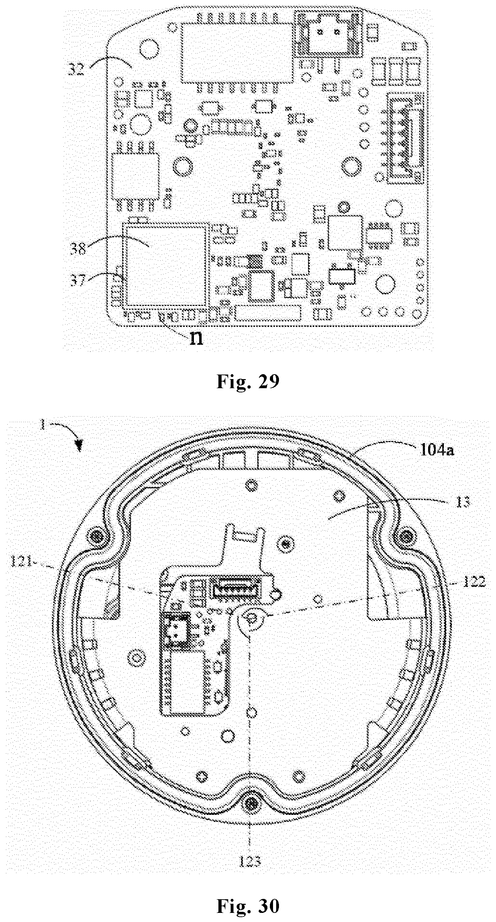

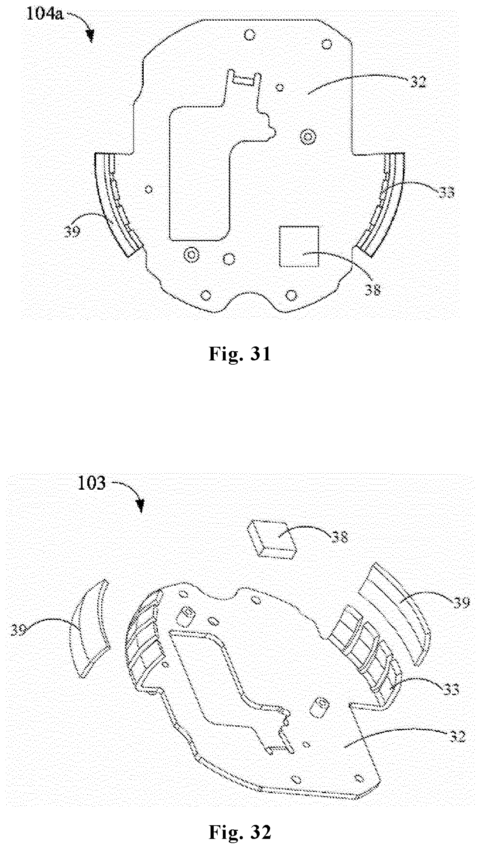

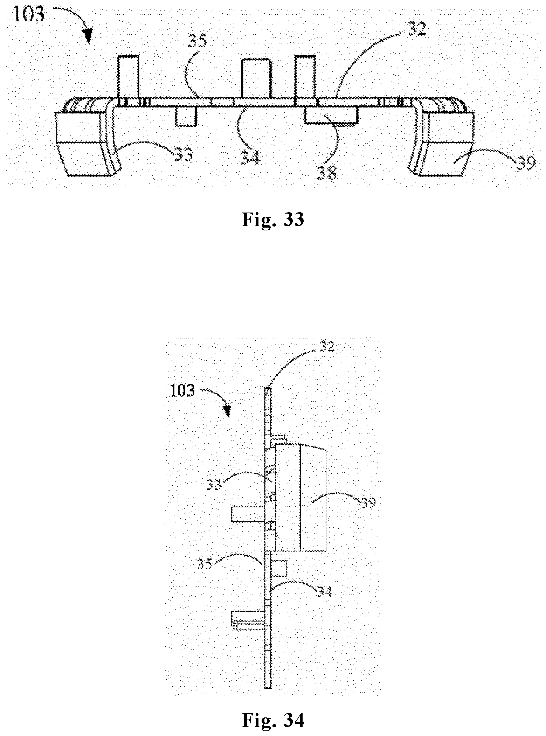

Fig. 26 shows a partial schematic structural diagram of the camera 1 shown in Fig. 16. Fig. 27 is a partial schematic structural diagram of the camera 1 shown in Fig. 16. Fig. 28 shows an enlarged view of the layout at A2 of the camera 1 shown in Fig. 27. Fig. 29 shows a schematic top view of structure of the control board assembly 13 of the camera 1 shown in Fig. 16. Fig. 30 shows a partial schematic structural diagram of the camera 1 shown in Fig. 16. Fig. 31 shows a schematic structural diagram showing the assembling of the heat dissipation assembly 15, a first thermally conductive member 38, and a second thermally conductive member 39 of the camera 1 shown in Fig. 16. Fig. 32 shows an exploded view showing the assembling of the heat dissipation assembly 15, the first thermally conductive member 38, and the second thermally conductive member 39 of the camera 1 shown in Fig. 31. Fig. 33 shows a schematic structural diagram showing the assembling of the heat dissipation assembly 15, the first thermally conductive member 38, and the second thermally conductive member 39 of the camera 1 shown in Fig. 31 from another perspective. Fig. 34 shows a schematic structural diagram showing the assembling of the heat dissipation assembly 15, the first thermally conductive member 38, and the second thermally conductive member 39 of the camera 1 shown in Fig. 31 from yet another perspective.

As shown in Figs. 24 to 34, the heat dissipation assembly 15 includes a heat dissipation main board 32 and a heat dissipation part 33 connected to the edge of the heat dissipation main board 32. The heat dissipation part 33 is provided at the edge of the heat dissipation main board 32 and abuts against the inner shell 103. In some embodiments, the heat dissipation assembly 15 may be the heat dissipation sheet metal 40, the heat dissipation main board 32 is the base plate 401 of the heat dissipation sheet metal 40, and the heat dissipation part 33 is the end plate 402. In some embodiments, the control board assembly 13 is assembled to the heat dissipation main board 32. The heat dissipation part 33 is bent from the edge of the heat dissipation main board 32 in a direction close to the control board assembly 13, and the outer side surface of the heat dissipation part 33 abuts against the inner surface of the inner shell 103. Due to the large area of the heat dissipation main board 32, the control board assembly 13 dissipates heat mainly with the heat dissipation main board 32, and transfers part of the heat to the inner shell 103 through the heat dissipation part 33 provided at the edge of the heat dissipation main board 32, and dissipates heat with the thermally conductive plastic of the inner shell 103. By connecting the heat dissipation assembly 15 to the inner shell 103 and making use of the heat dissipation assembly 15 and the inner shell 103 simultaneously for heat dissipation, the heat dissipation performance of the camera 1 can be enhanced.

In some embodiments, the heat dissipation main board 32 includes a first heat dissipation surface 34 and a second heat dissipation surface 35 which are provided opposite to each other. The first heat dissipation surface 34 faces the control board assembly 13 and is at a distance from the control board assembly 13 so that there is a heat dissipation space between the control board assembly 13 and the first heat dissipation surface 34. In some embodiments, the second heat dissipation surface 35 faces the power board 16 and is at a distance from the power board 16 so that there is a heat dissipation space between the power board 16 and the second heat dissipation surface 35.

In some embodiments, the control board assembly 13 is assembled to the first heat dissipation surface 34. The control board assembly 13 includes a circuit main board 36 and a circuit device 37 protruding from a surface of the circuit main board 36 toward the first heat dissipation surface 34. There is a distance between the surface of the circuit device 37 and the first heat dissipation surface 34. This distance can be a safe distance. The distance L4 between the surface of the circuit device 37 and the first heat dissipation surface 34 is not less than 0.5 mm. By setting an appropriate distance between the surface of the circuit device 37 and the first heat dissipation surface 34, the surface of the circuit device 37 can be prevented from contacting the first heat dissipation surface 34 so as to meet the safety distance, and under the condition of meeting the safety distance, the heat generated by the circuit device 37 can be quickly absorbed by the first heat dissipation surface 34, thereby improving the heat dissipation performance.

In this embodiment, the heat dissipation assembly 15 is provided between the control board assembly 13 and the power board 16. The distance L5 between the heat dissipation assembly 15 and the control board assembly 13 can be maintained at about 3.5 mm. In this embodiment, the maximum height of the control board assembly 13 is set to 3 mm, and the gap between the surface of the control board assembly 13 and the first heat dissipation surface 34 is set to at least 0.5 mm. Therefore, the gap between the first heat dissipation surface 34 and the control board assembly 13 is set to at least 3.5 mm. In this embodiment, the thickness L6 of the circuit device 37 may be 1 mm. Generally, the thickness L6 of the circuit device 37 is about 1 mm, but it is not limited thereto. The gap between the surface of the circuit device 37 and the heat dissipation assembly 15 may be 2.5 mm (obtained from the difference between L5 and L6).

In some embodiments, the camera 1 further includes a first thermally conductive member 38 which is compressed and filled between the surface of the circuit device 37 and the first heat dissipation surface 34. Before the first thermally conductive member 38 is compressed, the size of the first thermally conductive member 38 in the axial direction Y of the first outer shell 104a is greater than the distance between the surface of the circuit device 37 and the first heat dissipation surface 34. The axial direction Y of the first outer shell 104a may be a longitudinal axis direction. The surface of the circuit device 37 can be in sufficient contact with the first heat dissipation surface 34 through the first thermally conductive member 38 to increase the contact area, thereby reducing the thermal resistance and improving the heat dissipation effect.

In some embodiments, before the first thermally conductive member 38 is compressed, the first thermally conductive member 38 partially covers the surface of the circuit device 37 (as shown in Fig. 29). After the first thermally conductive member 38 is compressed, the first thermally conductive member 38 completely covers the surface of the circuit device 37. Since the mass of the first thermally conductive member 38 does not change before and after being compressed and its thickness decreases after being compressed, the cross-sectional area of the first thermally conductive member 38 will become larger. By setting the cross-sectional area of the first thermally conductive member 38 smaller than the surface of the circuit device 37, after the first thermally conductive member 38 is compressed, it is ensured that the first thermally conductive member 38 can completely cover the surface of the circuit device 37 without wasting the first thermally conductive member 38, which reduces the cost.

In some embodiments, a thermally conductive interface material is filled between the surface of the circuit device 37 and the first heat dissipation surface 34. The thermally conductive interface material completely covers the surface of the circuit device 37 after being compressed. The thickness of the filled thermally conductive interface material can be 3 mm. In order to ensure that the surface of the circuit device 37 can be completely covered by the compressed thermally conductive interface material, the thickness of the thermally conductive interface material is set larger than the gap between the upper surface of the circuit device 37 and the first heat dissipation surface 34, thus ensuring that the upper surface of the circuit device 37 is in sufficient contact with the thermally conductive interface material.

In this embodiment, the circuit device 37 may be a square device, and its side length n can be 10 mm (as shown in Fig. 29). According to the principle of mass conservation, when the thermally conductive interface material completely covers the circuit device 37 after being compressed, the unilateral reduction amount k1 of the side length of the thermally conductive interface material compared with the side length of the circuit device 37 can be calculated by the following formula 7. The specific calculation process is as follows:

$$\mathrm{k1} = 0.5(\mathrm{L}_4 - \sqrt{\frac{(H-t_2){L_4}^2}{t_1}}) \qquad \text{(Formula 7)}$$

In this embodiment, the reduction value k1 is 0.4mm, that is, the side length of the thermally conductive interface material is 9.2 mm. Generally, the cross-sectional area of the thermally conductive interface material before being compressed is smaller than that of the circuit device 37. Such configuration can ensure that the surface of the circuit device 37 is completely covered without wasting the thermally conductive interface material, thereby reducing the cost. In some other embodiments, quantitative volume ratio can also be used for calculation, which is not limited in the present disclosure.

In some embodiments, the thermally conductive interface material may be silicone rubber. In some embodiments, the thermally conductive interface material has a compression ratio in the range from 10% to 30%. Too high a compression ratio is not good. According to thermodynamics force analysis, if the compression ratio of the thermally conductive interface material is too high, it is susceptible to excessive thermal stress, thus deforming the circuit device 37 and the heat dissipation main board 32 provided above and below it. Therefore, by setting the compression ratio of the thermally conductive interface material appropriately, the contact area between the surface of the circuit device 37 and the first heat dissipation surface 34 can be effectively increased, the contact thermal resistance can be reduced, and the heat dissipation performance can be optimized.

In some embodiments, the first thermally conductive member 38 may be silicone rubber which has stable performance. In some embodiments, the compression ratio of the first thermally conductive member 38 ranges from 10% to 30%. The material of the first thermally conductive member 38 may be the above-mentioned thermally conductive interface material, and the specific setting parameters, setting positions and functions thereof can be found above, and will not be repeated here.

In some embodiments, the camera 1 further includes a second thermally conductive member 39 that is compressed and filled between the outer side surface of the heat dissipation part 33 and the inner surface of the inner shell 103 (as shown in Fig. 27). Before the second thermally conductive member 39 is compressed, the size of the second thermally conductive member 39 in a radial direction X of the first outer shell 104a is larger than that of the gap between the outer side surface of the heat dissipation part 33 and the inner side surface of the first outer shell 104a in the radial direction of the first outer shell 104a. The radial direction X of the first outer shell 104a may be a transverse axis direction. With this configuration, the outer side surface of the heat dissipation part 33 can be in sufficient contact with the inner side surface of the inner shell 103 through the second thermally conductive member 39, thereby increasing the contact area, reducing thermal resistance, and improving the heat dissipation effect.

In some embodiments, before the second thermally conductive member 39 is compressed, the second thermally conductive member 39 partially covers the outer wall of the heat dissipation part 33. After the second thermally conductive member 39 is compressed, the second thermally conductive member 39 completely covers the outer wall of the heat dissipation part 33. Since the mass of the second thermally conductive member 39 does not change before and after being compressed and its thickness decreases after being compressed, the cross-sectional area of the second thermally conductive member 39 will become larger. By setting the cross-sectional area of the second thermally conductive member 39 smaller than that of the outer side wall of the heat dissipation part 33, after the second thermally conductive member 39 is compressed, it is ensured that the second thermally conductive member 39 can completely cover the outer side wall of the heat dissipation part 33 without wasting the second thermally conductive member 39, which reduces the cost.

In some embodiments, a thermally conductive interface material is filled between the outer ide surface of the heat dissipation part 33 and the inner side surface of the first outer shell 104a. The thermally conductive interface material completely covers the outer side surface of the heat dissipation part 33 after being compressed. For example, the thermally conductive interface material may have a length of 25 mm and a width of 12 mm. In order to reduce the heat conduction thermal resistance, the distance L7 between the outer ide surface of the heat dissipation part 33 and the inner side surface of the first outer shell 104a is set to 1 mm, and the thickness L8 of the thermally conductive interface material filled between the outer side surface of the heat dissipation part 33 and the inner side surface of the first outer shell 104a may be 1.2 mm. The compression ratio of the thermally conductive interface material can be 20% so as to ensure sufficient contact and reduce the contact thermal resistance. When assembling the heat dissipation assembly 15, firstly, the thermally conductive interface material is provided on the outer side surface of the heat dissipation part 33, and then the heat dissipation part 33 and the thermally conductive interface material on the outer side surface of the heat dissipation part 33 are assembled to the inner side surface of the first outer shell 104a. This configuration ensures that misalignment is unlikely to occur during assembling and ensures that the outer side surface of the heat dissipation part 33 is in sufficient contact with and is closely fitted and engaged with the inner side surface of the first outer shell 104a, thereby reducing the thermal resistance and improving the heat dissipation effect.

In some embodiments, the material of the second thermally conductive member 39 may be silicone rubber which has stable performance. In some embodiments, the compression ratio of the second thermally conductive member 39 ranges from 10% to 30%, and preferably, is 20%. The material of the second thermally conductive member 39 can be the above-mentioned thermally conductive interface material, and the specific setting parameters, setting positions and functions thereof can be found above, and will not be repeated here.

In some embodiments, the power board 16 includes a power main board 200 and a power device 41 protruding from a surface of the power main board 200 toward the second heat dissipation surface 35 (as shown in Fig. 24). There is a distance between the surface of the power device 41 and the second heat dissipation surface 35. This distance can be a safe distance. By setting an appropriate distance between the surface of the power device 41 and the second heat dissipation surface 35, the surface of the power device 41 can be prevented from contacting the second heat dissipation surface 35 so as to meet the safety distance, and under the condition of meeting the safety distance, the heat generated by the power device 41 can be quickly absorbed by the second heat dissipation surface 35, thereby improving the heat dissipation performance.

In some embodiments, the power board 16 also includes other types of power devices 47 protruding from the power main board 200 away from the second heat dissipation surface 35. The other types of power devices 47 are provided inside the second outer shell 104b. The heat generated by the power board 16 is dissipated into the internal air of the camera 1 through convection effect, and the heat in the internal air is transferred to the second outer shell 104b and the first outer shell 104a through convection effect, where the ratio between the heat transferred to the second outer shell 104b and the heat transferred to the first outer shell 104a is adjusted according to design requirements. The first outer shell 104a dissipates the heat into the environment by the convection effect of the environment, to achieve the purpose of removing the heat generated inside the camera 1. In addition, the volumes of other types of power devices 47 are larger than that of the power device 41, and the other types of power devices 47 with larger volumes are provided inside the second outer shell 104b to effectively utilize the heat dissipation space inside the second outer shell 104b for heat dissipation. The power device 41 with a smaller volume is provided on the side close to the second heat dissipation surface 35 to effectively utilize the heat dissipation main board 32 for heat absorption. On the one hand, the space layout is effectively utilized to make the layout of the power main board 200 more compact; on the other hand, the power devices on the upper and lower sides of the power main board 200 can quickly dissipate heat, thereby improving the heat dissipation effect.

In this embodiment, the power board 16 adopts convection between the heat dissipation main board 32 and the second outer shell 104b for heat dissipation. There is limited space for convection between it and the heat dissipation main board 32. In order to increase the intensity of the convection heat transfer, the distance L9 between the second heat dissipation surface 35 and the surface of the power main board 200 is greater than the distance between the surface of the power device 41 and the second heat dissipation surface 35 (as shown in Fig. 24). The distance between the surface of the power device 41 of the power board 16 and the second heat dissipation surface 35 is obtained by the following formula 8. The specific calculation process is as follows:

$$Z = \frac{5}{\sqrt{Re}}x = 5\sqrt{\frac{v}{ux}}x \qquad \text{(Formula 8)}$$

In this embodiment, the distance can be 7.1 mm, and L9 is rounded up to 7.5 mm, thus ensuring that the gap is greater than the thickness of a boundary layer.

In some embodiments, the inner surface of the inner shell 103 is the heat dissipation surface for the first outer shell 104a, and the outer side surface of the heat dissipation part 33 is the heat dissipation surface for the heat dissipation part 33. The ratio of the area of the inner surface of the inner shell 103 to the area of the outer side surface of the heat dissipation part 33 is not less than 1:3. As shown in Fig. 30, the heat dissipation area of the first outer shell 104a is divided into three parts. The region between 121 and 122 (121-122) mainly dissipates the heat from the lamp board 17, and the region 121-123 and the region 122-123 mainly dissipate the heat dissipated from the control board assembly 13 through the heat dissipation assembly 15. Taking the region 121-123 as an example, the heat dissipation area Ap of the first outer shell 104a in this region may be 900 mm².

As shown in Figs. 26 to 28 and Figs. 31 to 34, the inner surface of the inner shell 103 is an arc surface. The outer side surface of the heat dissipation part 33 is an arc surface. The outer side surface of the heat dissipation part 33 fits and is engaged with the inner surface of the inner shell 103. By filling the second thermally conductive member 39 between the outer side surface of the heat dissipation part 33 and the inner surface of the inner shell 103, the outer side surface of the heat dissipation part 33 is in more sufficient contact with the inner surface of the inner shell 103, so that most of the heat conducted from the heat dissipation main board 32 can be conducted to the inner shell 103 through the heat dissipation part 33, and the thermally conductive plastic of the inner shell 103 is used for heat conduction and heat dissipation, thus improving the heat dissipation performance of the camera 1.

In some embodiments, the heat dissipation main board 32 and the heat dissipation part 33 are integrally formed. The integral formation leads to faster heat conduction, a simple structure and easy assembly. In some embodiments, the heat dissipation part 33 is claw-shaped. Since the heat dissipation part 33 is hard to bend as a whole, it is provided in a claw shape. In order to ensure the heat dissipation effect, in this embodiment, the number of claws is set to four, but can also be set to other numbers. However, the number of claws should be set neither too large nor too small, because the heat dissipation effect cannot be achieved if the claw-shaped heat dissipation part 33 is too thin, and it is hard to bend if the claw-shaped heat dissipation part 33 is too thick. Therefore, the number can be set according to actual needs and is not limited in the present disclosure.

Before installing the heat dissipation assembly 15, the claw-shaped heat dissipation part 33 is provided with the above-mentioned thermally conductive interface material, thus ensuring a tight engagement between the outer side surface of the heat dissipation part 33 and the inner surface of the inner shell 103. Such configuration can facilitate installation and makes it less prone to misalignment. Moreover, the length and width of the heat dissipation part 33 should be set neither too large nor too small. If the length and width are too large, it easily leads to waste, and if the length and width are too small, the heat dissipation effect cannot be achieved, reference can be made to the above calculation results, which are not repeated here. In some embodiments, the material of the heat dissipation assembly 15 is aluminum alloy and its model number can be AL5052 which has good moulding and processing properties and thermal conduction performance.

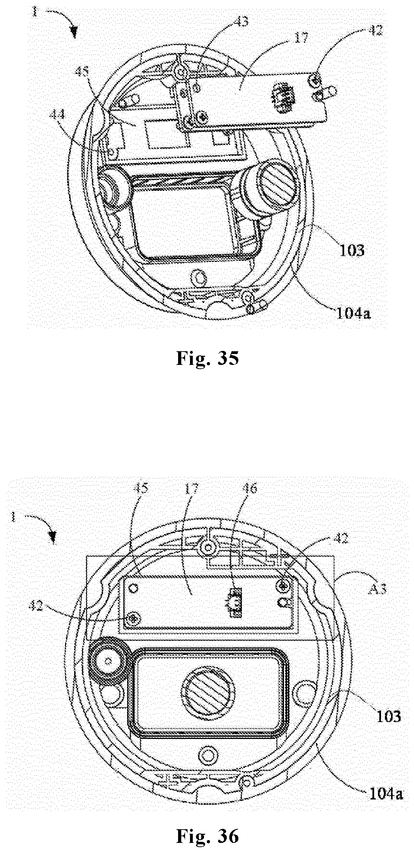

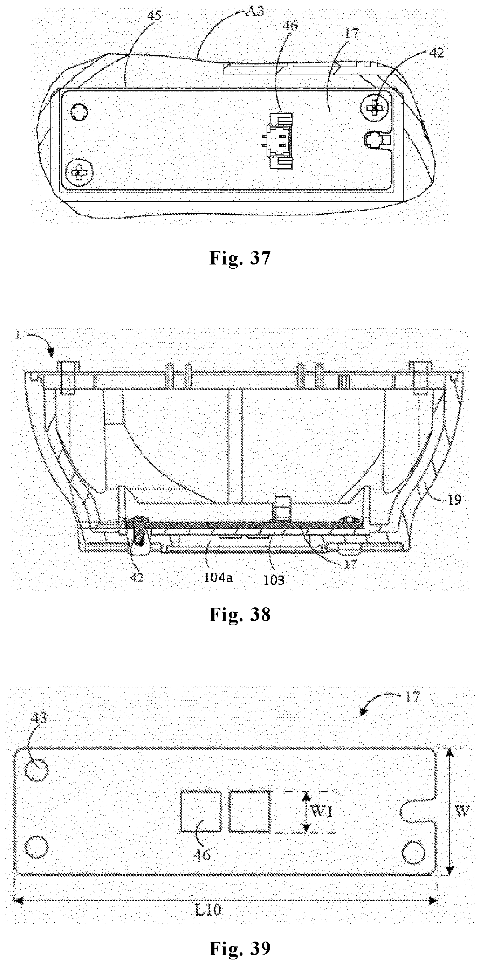

Fig. 35 shows a partial schematic structural diagram of the camera 1 shown in Fig. 16. Fig. 36 shows a partial schematic structural diagram of the camera 1 shown in Fig. 16. Fig. 37 shows a schematic structural diagram at A3 of the camera 1 shown in Fig. 36. Fig. 38 shows a partial schematic structural diagram of the camera 1 shown in Fig. 36. Fig. 39 shows a schematic structural diagram of the lamp board 17 of the camera 1 shown in Fig. 35. The lamp board 17 is assembled to the first outer shell 104a. In this embodiment, the lamp board 17 is assembled to the inner surface of the inner shell 103. The surface of the lamp board 17 fits and is engaged with the inner surface of the inner shell 103. The lamp board 17 mainly dissipates heat through the surface of the inner shell 103.

In some embodiments, the camera also includes a positioning member 42. The lamp board 17 is provided with a through hole 43 that matches the positioning member 42. The inner surface of the inner shell 103 is provided with a positioning hole 44 at a position corresponding to the position of the through hole 43. The lamp board 17 is assembled to the inner surface of the inner shell 103 through the cooperation of the positioning member 42 with the through hole 43 and the positioning hole 44. The positioning member 42 is used to fix the lamp board 17, which has a better fixing effect and ensures more contact between the surface of the lamp board 17 and the surface of the inner shell 103, thereby improving the heat dissipation effect.

In some embodiments, the bottom wall of the inner shell 103 is provided with an installation groove 45, and the positioning hole 44 is provided at the bottom of the installation groove 45. The lamp board 17 is assembled inside the installation groove 45, and the surface of the lamp board 17 fits and is engaged with the bottom of the installation groove 45. The installation groove 45 is provided with a positioning hole 44 at a position corresponding to the position of the through hole 43. The lamp board 17 is assembled inside the installation groove 45 through the cooperation of the positioning member 42 with the through hole 43 and the positioning hole 44. The inner surface of the inner shell 103 is provided with the above-mentioned installation groove 45. The lamp board 17 is installed inside the installation groove 45, and there is a gap between the edge of the lamp board 17 and the side wall of the installation groove 45. In some embodiments, the distance between the edge of the lamp board 17 and the side wall of the installation groove 45 is not less than 0.3 mm. Generally, when installing the lamp board 17, a gap of 0.1 mm is left at each edge of the lamp board 17, which is for the convenience of installation on one hand, and is to avoid contact with the edge of the installation groove 45 on the other hand, so as to ensure that the edge of the lamp board 17 is not in contact with the edge of the installation groove 45, which would reduce the conduction effect of heat from the lamp board 17 in the lateral direction. Therefore, the distance between the edge of the lamp board 17 and the side wall of the installation groove 45 is set to at least 0.3 mm. Therefore, in the length direction of the lamp board 17, both the avoidance length and width of the space between the lamp board 17 and the installation groove 45 are 0.6 mm, which is limited in the present disclosure.

In some embodiments, the positioning hole 44 penetrates through the inner shell 103 and extends to the first outer shell 104a, and the hole depth of the positioning hole 44 is greater than the maximum thickness of the inner shell 103. Since the material of the inner shell 103 is thermally conductive plastic which is relatively brittle, the hole depth of the positioning hole 44 is set to be greater than the maximum thickness of the inner shell 103, so that the positioning member 42 is fixed to the first outer shell 104a, and the surface of the lamp board 17 fits and is engaged with the surface of the inner shell 103 more closely. Since the lamp board 17 is in direct contact with the inner shell 103, the material of the lamp board 17 is set as epoxy resin. Compared with related technologies, epoxy resin has weaker thermal conduction performance and lower cost. As the lamp board 17 is in direct contact with the inner shell 103, it mainly dissipates heat through the inner shell 103. By using an epoxy resin board without affecting the heat dissipation effect, the cost can be reduced, thereby reducing the cost of the entire camera 1.

In some embodiments, the positioning member 42 may be a bolt. The lamp board 17 is fixed on the first outer shell 104a through the bolt, and the threads provided inside the positioning hole 44 of the first outer shell 104a is of no less than two turns. In order to make the lamp board 17 in close contact with the surface of the inner shell 103, the depth of the positioning hole 44 is at least greater than the thickness of the inner shell 103, and may be 1.8 mm, for example. With this configuration, when the lamp board 17 and the first outer shell 104a are fixed by the bolt, it is ensured that the bolt fits and is engaged with the lamp board 17 closely, so that the lamp board 17 closely contacts the first outer shell 104a, thus increasing the pressure on the contact surface between the lamp board 17 and the first outer shell 104a, reducing thermal resistance, increasing flatness, and improving heat dissipation effect.

In some embodiments, the control board assembly 13 and the lamp board 17 are provided to be at least partially offset to each other in the radial direction X of the first outer shell 104a. The heat dissipation part 33 is provided closer to the control board assembly 13 than the lamp board 17 in the radial direction of the first outer shell 104a. Since the control board assembly 13 is assembled to the heat dissipation assembly 15, the heat generated by the control board assembly 13 is transferred to the inner shell 103 through the heat dissipation main board 32 and the heat dissipation part 33 for heat conduction. The lamp board 17 is assembled to the surface of the inner shell 103 and the lamp board 17 is arranged to fit and be engaged with the surface of the inner shell 103, so the heat generated by the lamp board 17 is directly transferred to the inner shell 103 in contact with the lamp board 17, and is mainly dissipated through the surface of the inner shell 103. With this configuration, the internal space of the two-color injection molded shell 19, which dissipates heat by means of different sides of the inner shell 103, is effectively utilized, without adding additional heat dissipation components. This can reduce the cost and improve the economic benefits of the product while ensuring the heat dissipation effect.

In some embodiments, the lamp board 17 is provided with lamp beads 46 which are symmetrically provided in the length direction and/or width direction of the lamp board 17. In some embodiments, the lamp beads 46 are symmetrically provided in the length direction of the lamp board 17. In some other embodiments, the lamp beads 46 are symmetrically provided in the width direction of the lamp board 17. In this embodiment, the lamp beads 46 are symmetrically provided in the length direction and width direction of the lamp board 17. This configuration, on the one hand, satisfies the appearance requirements of the lamp board 17, and on the other hand, facilitates the routing of circuits connected to the lamp beads 46, reduces process requirements, and thereby reduces the cost.

In some embodiments, the maximum width dimension W of the lamp board 17 is at least three times the maximum width W1 of the lamp beads 46. In some embodiments, the maximum length dimension L10 of the lamp board 17 is at least 3 times the maximum width dimension W of the lamp board 17.

In this embodiment, the lamp board 17 can be made of FR4 material which has the thermal conductivity of $\beta2$, and the convection heat dissipation performance of the lamp board 17 depends on the convection heat transfer coefficient h. The convection heat transfer coefficient h of the lamp board 17 is obtained by the following formula 9. The specific calculation process is as follows:

$$h = 0.59\beta_2 \left(\frac{g\alpha_v \Delta t}{\alpha v W}\right)^{0.25} \qquad \text{(Formula 9)}$$

wherein W represents the width of the lamp board 17. It can be seen from the above formula 9 that in order to maximize the heat dissipation performance and increase the convection heat transfer coefficient h, it is necessary to reduce the width W of the lamp board 17. Restricted by the actual safety margin requirement, the width W must be widened by at least one time the width of the lamp beads 46. For example, the width of the lamp board 17 is 12 mm, and the total length of the lamp board 17 is 3 times the width, namely 36 mm. The specific design can be based on actual needs and is not limited in the present disclosure.

In the above scheme, the camera 1 meets the temperature rise requirements of the product through the optimized design of the heat dissipation scheme, and its heat dissipation effect is equivalent to that of the metal shell. Compared with the die-cast shell, it effectively reduces the product cost and has better economic benefits and enhances the market competitiveness of the camera.

The present disclosure also provides a camera 1 which includes an inner shell 103 made of thermally conductive plastic material, a first outer shell 104a made of plastic material, a heat dissipation assembly 15 and a lens assembly 20. The first outer shell 104a covers the inner shell 103 to form a receiving cavity with an opening. The inner shell 103 is defined such that at the end surface with the opening, the end surface of the first outer shell 104a is higher than the end surface of the inner shell 103. The heat dissipation assembly 15 includes a heat dissipation main board 32 and a heat dissipation part 33 extending along the heat dissipation main board 32. The lens assembly 20 is supported by the heat dissipation main board 32 of the heat dissipation assembly 15. The lens assembly 20 and the heat dissipation assembly 15 are both provided inside the receiving cavity such that the heat dissipation part 33 of the heat dissipation assembly 15 is in surface contact with the inner surface of the inner shell 103, so that the heat generated by the lens assembly 20 flows through the heat dissipation main board 32, the heat dissipation part 33, the inner shell 103 and the first outer shell 104a in sequence.

In some embodiments, the heat dissipation part 33 extends in a same direction as the optical axis of the lens assembly 20, and the heat dissipation part 33 extends in a direction away from the opening of the receiving cavity. In some embodiments, a first thermally conductive member 38 is filled between the lens assembly 20 and the heat dissipation main board 32. The first thermally conductive member 38 is defined such that it is compressed under the effect of the clamping force formed by the lens assembly 20 and the heat dissipation main board 32. In some embodiments, the second thermally conductive member 39 is filled between the heat dissipation part 33 and the inner surface of the inner shell 103, and the second thermally conductive member 39 is defined such that it is compressed under the effect of the clamping force formed by the heat dissipation part 33 and the inner surface of the inner shell 103, and the compression ratio of the second thermally conductive member 39 is not less than that of the first thermally conductive member 38.

The present disclosure also provides a camera 1 which includes an inner shell 103 made of thermally conductive plastic material, a first outer shell 104a made of plastic material, and a lamp board 17. The first outer shell 104a covers the inner shell 103 to form a receiving cavity with an opening. The side of the inner shell 103 and the side of the first outer shell 104a that are away from the opening are both provided with fill-light through-holes that are adapted in shape. The lamp board 17 is provided inside the receiving cavity and covers the fill-light through-holes, so that the heat generated by the lamp board 17 flows through the inner shell 103 and the first outer shell 104a in sequence. The dimension of the lamp board 17 is defined to meet the following requirements: the width of the lamp board 17 is not less than three times the width of the lamp beads provided on the lamp board 17, and the length of the lamp board 17 is not less than three times the width of the lamp board 17.

In some embodiments, the outer shell includes a second outer shell 104b and a first outer shell 104a that are separately provided. The first outer shell 104a is provided with a viewing window 102 facing the lens assembly 20, and an electronic device is provided in the first outer shell 104a. The inner shell 103 is attached to the inner surface of first outer shell 104a. In some embodiments, the shape of the outer surface of the inner shell 103 conforms to the shape of the inner surface of the first outer shell 104a, and the shape of the outer surface of the inner shell 103 and the inner surface of the first outer shell 104a fit and are engaged with each other. In some embodiments, the first outer shell 104a includes an engagement surface that is in sealing engagement with the second outer shell 104b, and there is a height difference between an end of the inner shell 103 close to the second outer shell 104b and the engagement surface to form a gap for accommodating a seal 22 for sealing the first outer shell 104a and the second outer shell 104b. The above-mentioned electronic device may be the control board assembly and lens assembly in the embodiments of Figs. 16 to 39.

The above are only preferred embodiments of the present disclosure and are not intended to limit the present disclosure. Any modifications, equivalent substitutions, improvements and the like within the spirit and principles of the present disclosure shall fall into the protection scope of the present disclosure.

## Claims

1. A camera, comprising:

    - a housing assembly formed as a rotary body structure with a central axis, wherein the housing assembly comprises an outer shell made of plastic and an inner shell made of thermally conductive plastic, the outer shell covers an outer side of the inner shell, an outer surface of the inner shell fits and is engaged with an inner surface of the outer shell, and the inner shell and the outer shell are kept fixed relative to each other through a connection structure; and
    - a lens assembly, an electronic device and a heat dissipation sheet metal that are received inside the housing assembly, wherein an optical axis of the lens assembly is oriented in a same direction as the central axis, and the heat dissipation sheet metal is engaged with the electronic device and the inner shell for transferring heat generated by the electronic device to the inner shell.

2. The camera according to claim 1, wherein the connection structure comprises a groove and a protrusion which are adapted in shape, one of the inner shell and the outer shell is provided with the groove, and the other of the inner shell and the outer shell is provided with the protrusion, and the protrusion is provided in the groove.

3. The camera according to claim 2, wherein the outer shell comprises an inner fitting and engaging surface that fits and is engaged with the inner shell, the inner shell comprises an outer fitting and engaging surface that fits and is engaged with the outer shell, and the inner fitting and engaging surface and the outer fitting and engaging surface extend around the central axis, and multiple sets of connection structures are provided on the outer fitting and engaging surface and the inner fitting and engaging surface at intervals around the central axis.

4. The camera according to claim 2, wherein the outer surface of the inner shell comprises an outer cylindrical surface and an outer conical surface extending around the central axis, and the inner surface of the outer shell comprises an inner cylindrical surface and an inner conical surface extending around the central axis, one of the groove and the protrusion is provided at a boundary area between the inner cylindrical surface and the inner conical surface, and the other of the groove and the protrusion is provided at a boundary area between the outer cylindrical surface and the outer conical surface.

5. The camera according to claim 2, wherein the groove is configured as a U-shaped groove, the protrusion is configured as a U-shaped protrusion, and an opening of the U-shaped groove faces a front end of the lens assembly.

6. The camera according to claim 1, wherein the heat dissipation sheet metal comprises a base plate and an end plate connected to an end of the base plate, the end plate is bent relative to the base plate, and the base plate is engaged with the electronic device, the end plate is engaged with the inner shell, and a shape of the end plate conforms to that of the inner shell.

7. The camera according to claim 6, wherein the camera further comprises a thermally conductive pad through which the end plate is engaged with the inner shell, the inner shell comprises a heat dissipation surface on one side, an area of the heat dissipation surface is a sum of an area of a heat transfer surface of the inner shell in contact with the thermally conductive pad and an area of a heat diffusion surface located at a periphery of the heat transfer surface, and an optimal value of the area $A_p$ of the heat dissipation surface is determined based on $R_a$:

$$R_a = R_c + R_{sp} + R_h$$

$$R_c = D/\left(k * A_p\right)$$

$$R_{sp} = \frac{A_p^{0.5} - A_s^{0.5}}{k \cdot \left(\pi \cdot A_p \cdot A_S\right)^{0.5}} \cdot \frac{\lambda \cdot k \cdot A_p \cdot R_c + \tanh(\lambda \cdot D)}{1 + \lambda \cdot k \cdot A_P \cdot R_c \cdot \tanh(\lambda \cdot D)}$$

$$R_h = 1/\left(hA_p\right)$$

wherein $R_a$ is a total thermal resistance, $R_c$ is a heat conduction thermal resistance in a normal direction, $R_{sp}$ is a diffusion thermal resistance, $R_h$ is a heat convection thermal resistance, $\lambda = \frac{\pi^{\frac{3}{2}}}{A_p^{0.5}} + \frac{1}{A_s^{0.5}}$, $A_S$ is an unilateral engaging area between the heat dissipation sheet metal and the inner shell, k is a thermal conductivity of the inner shell, D is a thickness of the inner shell, and h is a convection heat transfer coefficient.

8. The camera according to claim 1, wherein a dimension W of the inner shell in a direction of the central axis is determined according to a following formula:

$$h = 0.59\beta_1 \left(\frac{g\alpha_V \Delta t}{\alpha v W}\right)^{0.25}$$

wherein h is a convection heat transfer coefficient, g is an acceleration of gravity, $\alpha_V$ is a cubic expansion coefficient, v is a dynamic viscosity coefficient, $\Delta t$ is an excess temperature, $\alpha$ is a thermal diffusivity, and β1 is a thermal conductivity of air inside the inner shell.

9. The camera according to claim 1, wherein the outer shell comprises a fixing post, and the inner shell comprises a reinforced surrounding wall that covers or partially covers an outer side of the fixing post.

10. The camera according to claim 1, wherein the outer shell comprises a first outer shell and a second outer shell that are separately provided, the lens assembly and the electronic device are provided in the first outer shell, and the inner shell is attached to an inner surface of the first outer shell, and the second outer shell is provided as a single-layer outer shell.

11. The camera according to claim 10, wherein the first outer shell is in sealing engagement with the second outer shell, the first outer shell comprises an engagement surface in sealing engagement with the second outer shell, and there is a height difference between an end of the inner shell close to the second outer shell and the engagement surface to form a gap for accommodating a sealing ring sealing the first outer shell and the second outer shell.

12. The camera according to claim 1, wherein the camera further comprises a thermally conductive pad clamped between the heat dissipation sheet metal and the inner shell, and a plurality of branch sheet metals that are provided side by side and spaced apart from each other, are formed at an end of the heat dissipation sheet metal in contact with the thermally conductive pad, and shapes of the plurality of branch sheet metals conform to a shape of the inner shell.

13. The camera according to claim 1, wherein the housing assembly comprises a first outer shell and a second outer shell that are separately provided, the first outer shell is provided with a viewing window facing the lens assembly, and the electronic device is provided inside the first outer shell, and the inner shell is attached to an inner surface of the first outer shell.

14. A camera housing assembly, comprising:

   - an inner shell made of thermally conductive plastic material;
   - a first outer shell made of plastic material;
   wherein the first outer shell covers the inner shell to form a first receiving cavity with an opening, and the inner shell is defined such that at an end surface with the opening, an end surface of the first outer shell is higher than an end surface of the inner shell;
   wherein an inner surface of the first outer shell is provided with a first connection structure, an outer surface of the inner shell is provided with a second connection structure, and the first connection structure receives the second connection structure, so that the outer surface of the inner shell and the inner surface of the first outer shell form a thermal conduction channel.

15. The camera housing assembly according to claim 14, wherein one of the first connection structure and the second connection structure is provided with a groove, and the other of the first connection structure and the second connection structure is provided with a protrusion adapted to the groove, and the groove receives the protrusion.

16. The camera housing assembly according to claim 15, wherein the first connection structure is the protrusion, the second connection structure is the groove, and the groove receives the protrusion.

17. The camera housing assembly according to any one of claims 14 to 16, wherein a height difference between the end surface of the first outer shell and the end surface of the inner shell is greater than 3 mm.

18. The camera housing assembly according to claim 14, wherein a longitudinal height W of the inner shell is defined such that the longitudinal height is negatively correlated with a convection heat transfer coefficient of the camera housing assembly.

19. The camera housing assembly according to claim 18, wherein the longitudinal height W of the inner shell is defined as:

$$\mathrm{h} = 0.59\beta_1 (\frac{g\alpha_V \Delta t}{\alpha v W})^{0.25}$$

wherein h is the convection heat transfer coefficient, g is an acceleration of gravity, $\alpha_V$ is a cubic expansion coefficient, v is a dynamic viscosity coefficient, $\Delta t$ is an excess temperature, $\alpha$ is a thermal diffusivity, and $\beta 1$ is a thermal conductivity of air inside the inner shell.

20. The camera housing assembly according to claim 19, wherein the housing assembly further comprises a second outer shell, the end surface of the first outer shell is provided with a sealing ring installation groove in which a sealing ring is placed, such that the first outer shell is in sealing engagement with the second outer shell.

21. A camera, comprising:

   a housing assembly, a control board assembly, and a lens assembly, wherein the housing assembly comprises an outer shell made of engineering plastic and an inner shell made of thermally conductive plastic, the outer shell comprises a first outer shell and a second outer shell, the first outer shell and the second outer shell are assembled to form a receiving cavity, the first outer shell is provided with a viewing window, both the control board assembly and the lens assembly are assembled in the receiving cavity and located inside the first outer shell, the lens assembly is assembled to the control board assembly and extends from the control board assembly toward the viewing window;
   wherein the first outer shell and the inner shell are integrally formed by two-color injection molding, the first outer shell covers an outer surface of the inner shell, and the control board assembly is in heat conduction with the inner shell.

22. The camera according to claim 21, wherein the camera further comprises a heat dissipation assembly provided in the receiving cavity; the heat dissipation assembly is assembled with the first outer shell and connected to the inner shell, and the control board assembly is assembled to the heat dissipation assembly, and conducts heat with the inner shell through the heat dissipation assembly.

23. The camera according to claim 22, wherein the heat dissipation assembly comprises a heat dissipation main board and a heat dissipation part connected to an edge of the heat dissipation main board, the control board assembly is assembled to the heat dissipation main board, and the heat dissipation part is bent from the edge of the heat dissipation main board in a direction close to the control board assembly, and an outer side surface of the heat dissipation part abuts against an inner surface of the inner shell.

24. The camera according to claim 23, wherein the heat dissipation main board comprises a first heat dissipation surface to which the control board assembly is assembled; the control board assembly comprises a circuit main board and a circuit device protruding from a surface of the circuit main board toward the first heat dissipation surface; and there is a distance between a surface of the circuit device and the first heat dissipation surface.

25. The camera according to claim 24, wherein the camera further comprises a first thermally conductive member which is compressed and filled between the surface of the circuit device and the first heat dissipation surface; wherein the first thermally conductive member completely covers the surface of the circuit device after being compressed.

26. The camera according to claim 23, wherein the camera further comprises a second thermally conductive member which is compressed and filled between the outer side surface of the heat dissipation part and the inner surface of the inner shell; wherein the second thermally conductive member completely covers the outer side surface of the heat dissipation part after being compressed.

27. The camera according to claim 22, wherein the camera further comprises a lamp board which is assembled to the first outer shell, and a surface of the lamp board fits and is engaged with the inner surface of the inner shell.

28. The camera according to claim 27, wherein the control board assembly and the lamp board are provided to be at least partially offset to each other in a radial direction of the first outer shell, and the heat dissipation assembly comprises a heat dissipation main board and a heat dissipation part, wherein the heat dissipation part is provided at an edge of the heat dissipation main board and abuts against the inner shell, the heat dissipation part is bent from the edge of the heat dissipation main board toward a side of the heat dissipation main board where the control board assembly is provided, and the heat dissipation part is provided closer to the control board assembly than the lamp board in the radial direction of the first outer shell; and/or
the inner surface of the inner shell is provided with an installation groove in which the lamp board is installed, and there is a gap between an edge of the lamp board and a side wall of the installation groove.

29. The camera according to claim 22, wherein the heat dissipation assembly is provided at an opening where the first outer shell and the second outer shell are engaged, and the heat dissipation assembly at least partially covers the opening.

30. The camera according to claim 22 or 29, wherein the camera comprises a power board, the heat dissipation assembly comprises a first heat dissipation surface and a second heat dissipation surface that are opposite to each other, and the control board assembly is assembled to the first heat dissipation surface, the power board is assembled to the second heat dissipation surface and is located inside the second outer shell, and the power board is electrically connected to the control board assembly.

**Fig. 1**

**Fig. 2**

Fig. 3

Fig. 4

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**Fig. 26**

**Fig. 27**

**Fig. 28**

**Fig. 29**

**Fig. 30**

**Fig. 31**

**Fig. 32**

**Fig. 33**

**Fig. 34**

EP 4 408 004 A1

**Fig. 35**

**Fig. 36**

**Fig. 37**

**Fig. 38**

**Fig. 39**

**EP 4 408 004 A1**

## INTERNATIONAL SEARCH REPORT

| International application No. |
|---|
| **PCT/CN2022/105899** |

**A. CLASSIFICATION OF SUBJECT MATTER**

H04N 5/225(2006.01)i; G03B 17/55(2021.01)i

According to International Patent Classification (IPC) or to both national classification and IPC

**B. FIELDS SEARCHED**

Minimum documentation searched (classification system followed by classification symbols)

H04N5/-; G03B17/-

Documentation searched other than minimum documentation to the extent that such documents are included in the fields searched

Electronic data base consulted during the international search (name of data base and, where practicable, search terms used)

CNABS; WPABSC; CNTXT; ENTXTC; CNKI; VEN; EPTXT; WOTXT; USTXT; ENTXT; IEEE: 海康威视, 萤石, 摄像头, 摄像机, 回转体, 壳, 连接, 散热, 导热, 面积, 优化, 最优, 热阻, 对流换热系数, 厚度, 高度, 深度; HIKVISION, EZVIZ, camera, lens, Rotary Body, Shell, connect+, heat dissipation, thermal conduct+, area, optim+, thermal resistance, Convect??? Heat Transfer Coefficient, thickness, height, depth

**C. DOCUMENTS CONSIDERED TO BE RELEVANT**

| Category* | Citation of document, with indication, where appropriate, of the relevant passages | Relevant to claim No. |
|---|---|---|
| PX | CN 114157781 A (HANGZHOU HIKVISION DIGITAL TECHNOLOGY CO., LTD.) 08 March 2022 (2022-03-08) claims 1-11, and description, paragraphs 0044-0102, and figures 1-4 and 15 | 1-30 |
| PX | CN 114157780 A (HANGZHOU HIKVISION DIGITAL TECHNOLOGY CO., LTD.) 08 March 2022 (2022-03-08) claims 1-10, and description, paragraphs 0048-0126, and figures 1-4 and 21 | 1-30 |
| PX | CN 216391178 U (HANGZHOU HIKVISION DIGITAL TECHNOLOGY CO., LTD.) 26 April 2022 (2022-04-26) claims 1-18, and description, paragraphs 0048-0089, and figures 1-4 and 15 | 1-30 |
| PX | CN 216391177 U (HANGZHOU HIKVISION DIGITAL TECHNOLOGY CO., LTD.) 26 April 2022 (2022-04-26) description, paragraphs 0068-0135, and figures 1-4 and 21 | 1-30 |
| X | CN 214707857 U (HANGZHOU EZVIZ SOFTWARE CO., LTD.) 12 November 2021 (2021-11-12) description, paragraphs 0027-0042, and figures 1 and 4 | 1-6, 9-18, 21-30 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 September 2022** | **10 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/105899** |

C.     DOCUMENTS CONSIDERED TO BE RELEVANT

| Category* | Citation of document, with indication, where appropriate, of the relevant passages | Relevant to claim No. |
| --- | --- | --- |
| A | CN 110173417 A (LIAONING TECHNICAL UNIVERSITY) 27 August 2019 (2019-08-27) entire document | 1-30 |
| A | US 2010043230 A1 (DELPHI TECHNOLOGY INC.) 25 February 2010 (2010-02-25) entire document | 1-30 |

Form PCT/ISA/210 (second sheet) (January 2015)

**INTERNATIONAL SEARCH REPORT**
Information on patent family members

International application No.

**PCT/CN2022/105899**

| Patent document cited in search report | | | Publication date (day/month/year) | Patent family member(s) | | | Publication date (day/month/year) |
|---|---|---|---|---|---|---|---|
| CN | 114157781 | A | 08 March 2022 | CN | 216391178 | U | 26 April 2022 |
| CN | 114157780 | A | 08 March 2022 | CN | 216391177 | U | 26 April 2022 |
| CN | 216391178 | U | 26 April 2022 | CN | 114157781 | A | 08 March 2022 |
| CN | 216391177 | U | 26 April 2022 | CN | 114157780 | A | 08 March 2022 |
| CN | 214707857 | U | 12 November 2021 | None | | | |
| CN | 110173417 | A | 27 August 2019 | CN | 110173417 | B | 29 December 2020 |
| US | 2010043230 | A1 | 25 February 2010 | None | | | |

Form PCT/ISA/210 (patent family annex) (January 2015)

**REFERENCES CITED IN THE DESCRIPTION**

**Patent documents cited in the description**

- CN 202111358312
- CN 202122811319
- CN 202111356893X